# EUROPEAN PATENT APPLICATION

(11) **EP 4 254 574 A1**
(43) Date of publication of application: **04.10.2023**
(21) Application number: 21897798.1
(22) Date of filing: 16.11.2021
(51) Int. Cl.: H01M 10/04, H01M 10/18, H01M 10/613, H01M 10/647, H01M 10/654, H01M 10/6551, H01M 10/6555, H01M 50/103, H01M 50/184

(54) **BIPOLAR STORAGE BATTERY**

(30) Priority: 27.11.2020 JP 2020197472; 10.02.2021 JP 2021020013
(71) Applicant: FURUKAWA ELECTRIC CO., LTD., Chiyoda-ku Tokyo 100-8322 (JP); The Furukawa Battery Co., Ltd., Yokohama-shi, Kanagawa-ken 240-0006 (JP)
(72) Inventor: TANAKA, Akira, Tokyo 100-8322 (JP); NAKAJIMA, Yasuo, Tokyo 100-8322 (JP); SUYAMA, Kenichi, Tokyo 100-8322 (JP); TANAKA, Hiroki, Tokyo 100-8322 (JP); TAIRA, Yoshinobu, Jyoban-shimofunao-machi, Iwaki-shi, Fukushima 972- 8501 (JP); HIROTA, Kenji, Jyoban-shimofunao-machi, Iwaki-shi, Fukushima 972- 8501 (JP)
(74) Representative: Grünecker Patent- und Rechtsanwälte PartG mbB
(86) International application number: PCT/JP2021/042074
(87) International publication number: WO 2022/113824

(57) **Abstract**

There is provided a bipolar battery capable of appropriately dissipating heat generated in a cell member to the outside by a simple configuration. A bipolar battery (1) includes: a plurality of cell members (150) each including a positive electrode (151) having a positive active material layer (103), a negative electrode (152) having a negative active material layer (104), and an electrolyte layer (105) interposed between the positive electrode (151) and the negative electrode (152); and a plurality of frame units (110), (120), and (130) configured to form a plurality of cells (C) individually housing the plurality of cell members (150). The cell members (150) are electrically connected to each other in series. On an outer side surface of at least one frame unit (110), (120), and (130) of the plurality of frame units (110), (120), and (130), a recess (160) opening to the outer side surface is formed.

## Description

### Technical Field

The present invention relates to a bipolar battery.

### Background Art

In recent years, power generation facilities using natural energy such as sunlight and wind power have been increasing. Since such power generation facilities cannot control the amount of power generation, the power generation facilities level a power load by using a storage battery. In other words, when the power generation amount is larger than the consumption amount, the difference is charged to the storage battery, and when the power generation amount is smaller than the consumption amount, the difference is discharged from the storage battery. As the above-described storage battery, a lead storage battery is frequently used from the viewpoint of economic efficiency, safety, and the like, and in particular, a bipolar lead storage battery has attracted attention from the viewpoint of energy density.

The bipolar lead storage battery includes: a plurality of cell members in each of which an electrolyte layer is interposed between a positive electrode having a positive active material layer and a negative electrode having a negative active material layer; and a plurality of frame units made of resin for housing the cell members, and is configured by connecting the cell members to each other in series by alternately stacking and assembling the cell members and the frame units.

The bipolar lead storage battery is required to have a high cell density in order to increase energy density. However, as the number of cells per unit volume in a bipolar lead storage battery structure increases, significant thermal challenges can arise compared to other battery structures. In a bipolar lead storage battery, heat generated in an active material layer of a cell member by a battery reaction remains inside the battery unless an appropriate transmission path to the outside is provided, and the cell member may be damaged by the heat, and the charge and discharge characteristics may be deteriorated.

Conventionally, for example, a current collector assembly for a bipolar lead storage battery illustrated in PTL 1 is known which appropriately transmits heat generated in an active material layer of a cell member in the bipolar lead storage battery to the outside.

The current collector assembly for the bipolar lead storage battery illustrated in PTL 1 includes an electrically-conductive silicon substrate and a frame joined to the electrically-conductive silicon substrate, in which the electrically-conductive silicon substrate includes one or more thin films that render the surface of the electrically-conductive silicon substrate electrically conductive and electrochemically stable in the presence of a lead acid electrolyte chemistry, and an interface between the frame and the electrically-conductive silicon substrate is hermetically sealed.

The current collector assembly includes a thermally-conductive rib for heat dissipation joined to a casing segment and a frame, and the frame forms a spacer that electrically insulates the thermally-conductive rib from the electrically-conductive silicon substrate.

### Citation List

### Patent Literature

PTL 1: JP 2018-524779 A

### Summary of Invention

### Technical Problem

However, the conventional current collector assembly for the bipolar lead storage battery illustrated in PTL 1 has the following problems.

In other words, in the case of the current collector assembly for the bipolar lead storage battery illustrated in PTL 1, heat dissipation when the electrically-conductive silicon substrate generates heat is appropriately performed to the outside via the thermally-conductive rib, but it is necessary to dispose an insulating spacer (frame) for electrical insulation between the electrically-conductive silicon substrate and the thermally-conductive rib. Therefore, an extra insulating spacer is required, so that the configuration of the member for dissipating heat is complicated.

In view of the above, an object of the present invention is to provide a bipolar battery capable of appropriately dissipating heat generated in a cell member to the outside by a simple configuration.

### Solution to Problem

In order to solve the above-described problems, the present invention provides a bipolar battery having the following configurations (1) and (2).
(1) The bipolar battery includes: a plurality of cell members each including a positive electrode having a positive active material layer, a negative electrode having a negative active material layer, and an electrolyte layer interposed between the positive electrode and the negative electrode, and being stacked at intervals; and a plurality of frame units forming a plurality of cells individually housing the plurality of cell members. The cell members are electrically connected to each other in series.
(2) On an outer side surface of at least one frame unit of the plurality of frame units, a recess opening to the outer side surface is formed.

### Advantageous Effects of Invention

According to the bipolar battery according to the present invention, since on an outer side surface of at least one frame unit of the plurality of frame units, a recess is formed which opens to the outer side surface, the surface area exposed to the outer side surface of the frame unit is increased, and the heat generated in the positive active material layer and the negative active material layer of the cell member by a battery reaction can be appropriately dissipated to the outside from the recess of the frame unit. Thus, it is possible to suppress deterioration of the charge and discharge characteristics due to heat remaining inside the battery.

Since it is only necessary to form, on the outer side surface of the frame unit, a recess which opens to the outer side surface, it is possible to simplify the configuration for achieving the heat dissipation function.

Therefore, according to the bipolar battery according to the present invention, it is possible to provide a bipolar battery capable of appropriately dissipating heat generated in the cell member to the outside by a simple configuration.

According to the bipolar battery according to the present invention, since each of the plurality of frame units includes a rim having joining surfaces facing each other in a stacking direction of the cell members, and the recess is formed on an outer side surface of a rim of at least one frame unit of the plurality of frame units, the surface area exposed to the outer side surface of the rim is increased, and the heat generated in the positive active material layer and the negative active material layer of the cell member by the battery reaction can be appropriately dissipated to the outside from the recess of the rim. Thus, it is possible to suppress deterioration of the charge and discharge characteristics due to heat remaining inside the battery.

Since it is only necessary to form, on the outer side surface of the rim, a recess which opens to the outer side surface, it is possible to simplify the configuration for achieving the heat dissipation function.

According to the bipolar battery according to the present invention, provided in the recess is a reinforcing rib extending in the stacking direction of the cell members connecting between open end edges of the recess. Thus, the surface area exposed to the outer side surface of the rim is further increased, and the heat generated in the positive active material layer and the negative active material layer of the cell member by the battery reaction can be more effectively dissipated to the outside from the recess of the rim.

By providing, in the recess, the reinforcing rib extending in the stacking direction of the cell members connecting between the open end edges of the recess, it is possible to improve the mechanical strength when the frame units are joined in the stacking direction at the joining surfaces. In particular, when the joining at the joining surfaces is performed by vibration welding, the rim is pressed in the stacking direction, and thus the mechanical strength is improved by providing the reinforcing rib extending in the stacking direction of the cell members connecting between the open end edges of the recess, which results in great practical benefits.

The bipolar battery according to the present invention is that the plurality of frame units includes: one or a plurality of bipolar plates disposed between the cell members adjacent to each other in the stacking direction; a pair of end plates disposed at one end and the other end in the stacking direction of the plurality of cell members; and a plurality of spacers disposed between the bipolar plates adjacent to each other in the stacking direction, between one end plate of the pair of end plates and the bipolar plate, and between the other end plate of the pair of end plates and the bipolar plate, that a plurality of cells individually housing the plurality of cell members is formed by the one or plurality of bipolar plates, the pair of end plates, and the plurality of spacers, that each of the one or plurality of bipolar plates, the pair of end plates, the plurality of spacers has joining surfaces facing each other in the stacking direction of the cell members, and that the recess is formed on an outer side surface of at least one of the plurality of spacers.

Thus, since on the outer side surface of at least one of the plurality of spacers, a recess is formed which opens to the outer side surface, the surface area exposed to the outer side surface of the spacer is increased, and the heat generated in the positive active material layer and the negative active material layer of the cell member by the battery reaction can be appropriately dissipated to the outside from the recess of the spacer. Thus, it is possible to suppress deterioration of the charge and discharge characteristics due to heat remaining inside the battery.

Since it is only necessary to form, on the outer side surface of the spacer, a recess which opens to the outer side surface, it is possible to simplify the configuration for achieving the heat dissipation function.

According to the bipolar battery according to the present invention, since the recess is formed on the outer side surface of at least one of the one or plurality of bipolar plates, the surface area exposed to the outer side surface of the bipolar plate is increased, and the heat generated in the positive active material layer and the negative active material layer of the cell member can be appropriately dissipated to the outside not only from the recess of the spacer but also from the recess of the bipolar plate.

According to the bipolar battery according to the present invention, provided in the recess is a reinforcing rib which extends in the stacking direction of the cell members and connects between the open end edges of the recess. By providing the reinforcing rib in the recess formed in the spacer, the surface area exposed to the outer side surface of the spacer is further increased, and the heat generated in the positive active material layer and the negative active material layer of the cell member by the battery reaction can be more effectively dissipated to the outside from the recess of the spacer. By providing the reinforcing rib in the recess formed in the bipolar plate, the surface area exposed to the outer side surface of the bipolar plate is further increased, and the heat generated in the positive active material layer and the negative active material layer of the cell member by the battery reaction can be more effectively dissipated to the outside from the recess of the bipolar plate.

By providing, in the recess formed in the spacer or in the recess formed in the bipolar plate, the reinforcing rib which extends in the stacking direction of the cell members and connects between the open end edges of the recess, it is possible to improve the mechanical strength when the one or plurality of bipolar plates, the pair of end plates, and the plurality of spacers are joined in the stacking direction at the joining surfaces. In particular, when the joining at the joining surfaces is performed by vibration welding, the members (the bipolar plates, the end plates, and the spacers) are pressed in the stacking direction, and thus the mechanical strength can be improved by providing the reinforcing rib which extends in the stacking direction and connects between the open end edges of the recess, which results in great practical benefits.

Since the bipolar battery according to the present invention is a bipolar lead storage battery in which the positive electrode has a positive electrode lead layer and the negative electrode has a negative electrode lead layer, the bipolar lead storage battery can appropriately dissipate heat generated in the cell member to the outside by a simple configuration.

### Brief Description of Drawings

FIG. 1 is a cross-sectional view illustrating a schematic configuration of a bipolar battery according to a first embodiment of the present invention;
FIG. 2 is a perspective view of an internal frame unit used in the bipolar battery illustrated in FIG. 1;
FIG. 3 is a cross-sectional view illustrating a schematic configuration of a bipolar battery according to a second embodiment of the present invention;
FIG. 4 is a perspective view of an internal frame unit used in a bipolar battery according to a third embodiment of the present invention;
FIG. 5 is a cross-sectional view illustrating a schematic configuration of a bipolar battery according to a fourth embodiment of the present invention;
FIG. 6 is a perspective view of a spacer used in the bipolar battery illustrated in FIG. 5;
FIG. 7 is a cross-sectional view illustrating a schematic configuration of a bipolar battery according to a fifth embodiment of the present invention;
FIG. 8 is a perspective view of a spacer used in the bipolar battery illustrated in FIG. 7;
FIG. 9 is a perspective view of a bipolar plate used in the bipolar battery illustrated in FIG. 7; and
FIG. 10 is a perspective view of a spacer used in a bipolar battery according to a sixth embodiment of the present invention.

### Description of Embodiments

Embodiments of a bipolar battery according to the present invention will be described with reference to the drawings, but the present invention is not limited only to the following embodiments described with reference to the drawings.

### First Embodiment

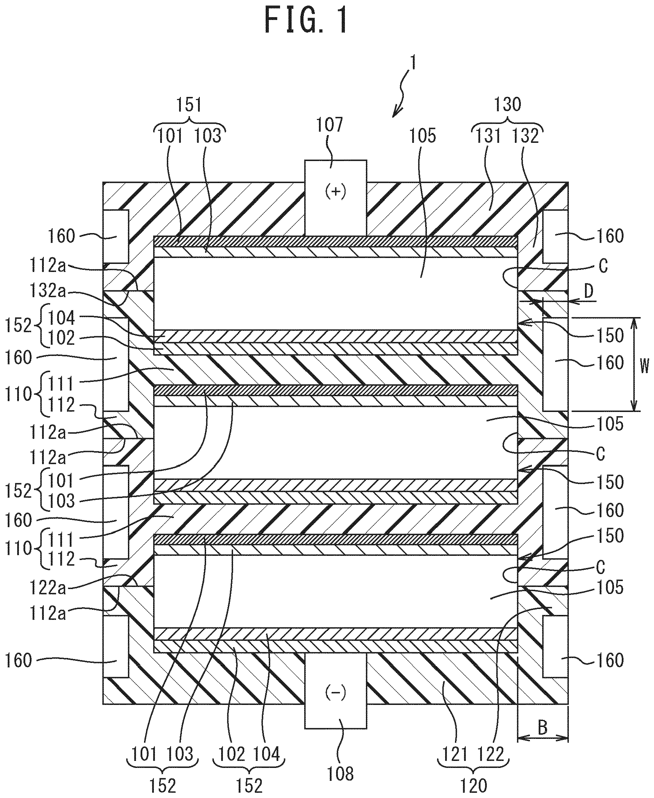

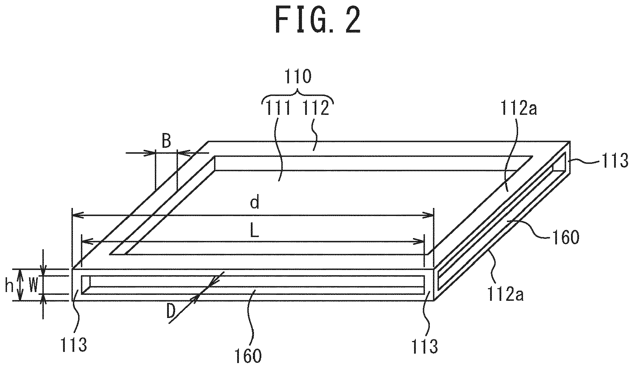

A bipolar battery according to a first embodiment of the present invention will be described with reference to FIGS. 1 and 2.

A bipolar battery 1 illustrated in FIG. 1 is a bipolar lead storage battery in which a positive electrode 151 has a positive electrode lead layer 101 and a negative electrode 152 has a negative electrode lead layer 102, and includes a plurality of cell members 150, a plurality of internal frame units (frame units) 110, a first end frame unit (frame unit) 120, and a second end frame unit (frame unit) 130.

The plurality of cell members 150 is stacked at intervals in the stacking direction (the vertical direction in FIG. 1).

The plurality of internal frame units 110, the first end frame unit 120, and the second end frame unit 130 form a plurality of cells (spaces) C that individually houses the plurality of cell members 150.

Each internal frame unit 110 has a rectangular planar shape, and is formed of a substrate (bipolar plate) 111 in which the positive electrode 151 is disposed on one surface and the negative electrode 152 is disposed on the other surface, and, for example, a quadrangular frame-shaped (picture frame-shaped) rim 112 provided at the circumferential edge of the substrate 111. The substrate 111 of the internal frame unit 110 is disposed between the cell members 150 adjacent to each other in the stacking direction (the vertical direction in FIG. 1) of the cell members 150. Each rim 112 of each of the internal frame units 110 includes joining surfaces 112a facing each other in the stacking direction (the vertical direction in FIG. 1) of the cell members 150.

The substrate 111 is integrally formed inside the rim 112. The internal frame unit 110 is made of a thermoplastic resin having sulfuric acid resistance (e.g., polyethylene, polypropylene, polystyrene, polyvinyl chloride, polymethyl methacrylate (acrylic resin), acrylonitrile-butadiene-styrene copolymer (ABS), polyamide (nylon), or polycarbonate). The substrate 111 is positioned in the middle of the rim 112 in the thickness direction (the vertical direction in FIG. 1) of the rim. The rim 112 has a thickness greater than the thickness of the substrate 111.

The first end frame unit 120 is formed of a rectangular planar-shaped first end plate 121 and a quadrangular frame-shaped (picture frame-shaped) rim 122. The first end plate 121 is integrally formed inside the rim 122. The first end frame unit 120 is made of a thermoplastic resin having sulfuric acid resistance.

The first end frame unit 120 surrounds a side surface of the cell member 150 and a negative electrode 152 side at one end side (lower end side in FIG. 1) of the bipolar battery 1. The first end plate 121 surrounds the negative electrode 152 side of the cell member 150, and the rim 122 surrounds the side surface of the cell member 150.

The first end plate 121 is disposed in parallel to the substrate 111 of the internal frame unit 110, and the rim 122 is arranged so as to be in contact with the rim 112 of the internal frame unit 110 positioned adjacent thereto. In other words, the rim 122 includes a joining surface 122a facing the rim 112 of the internal frame unit 110 in the stacking direction (the vertical direction in FIG. 1) of the cell members 150.

The first end plate 121 has a thickness greater than the thickness of the substrate 111. The rim 122 has a thickness greater than the thickness of the first end plate 121. The first end plate 121 is set so as to be positioned at one end (lower end in FIG. 1) of the rim 122 in the thickness direction (the vertical direction in FIG. 1) of the rim.

The second end frame unit 130 is formed of a rectangular planar-shaped second end plate 131 and a quadrangular frame-shaped (picture frame-shaped) rim 132. The second end plate 131 is integrally formed inside the rim 132. The second end frame unit 130 is made of a thermoplastic resin having sulfuric acid resistance.

The second end frame unit 130 surrounds the side surface of the cell member 150 and a positive electrode 151 side at the other end side (upper end side in FIG. 1) of the bipolar battery 1. The second end plate 131 surrounds the positive electrode 151 side of the cell member 150, and the rim 132 surrounds the side surface of the cell member 150.

The second end plate 131 is disposed in parallel to the substrate 111 of the internal frame unit 110, and the rim 132 is arranged so as to be in contact with the rim 112 of the internal frame unit 110 positioned adjacent thereto. In other words, the rim 132 includes a joining surface 132a facing the rim 112 of the internal frame unit 110 in the stacking direction (the vertical direction in FIG. 1) of the cell members 150.

The second end plate 131 has a thickness greater than the thickness of the substrate 111. The rim 132 has a thickness greater than the thickness of the second end plate 131. The second end plate 131 is set so as to be positioned at the other end (upper end in FIG. 1) of the rim 132 in the thickness direction (the vertical direction in FIG. 1) of the rim.

A positive electrode lead layer 101 is disposed on one surface of the substrate 111. A negative electrode lead layer 102 is disposed on the other surface of the substrate 111. A positive active material layer 103 is disposed on the positive electrode lead layer 101. A negative active material layer 104 is disposed on the negative electrode lead layer 102.

Between the positive active material layer 103 and the negative active material layer 104 facing each other, an electrolyte layer 105 is disposed which is made of a glass fiber mat or the like impregnated with an electrolyte such as sulfuric acid.

A negative electrode lead layer 102 is disposed on the other surface of the first end plate 121. A negative active material layer 104 is disposed on the negative electrode lead layer 102 on the first end plate 121. Between the negative active material layer 104 on the first end plate 121 and the positive active material layer 103 on the substrate 111 facing the negative active material layer, an electrolyte layer 105 is disposed which is made of a glass fiber mat or the like impregnated with an electrolyte such as sulfuric acid.

A positive electrode lead layer 101 is disposed on one surface of the second end plate 131. A positive active material layer 103 is disposed on the positive electrode lead layer 101 on the second end plate 131. Between the positive active material layer 103 on the second end plate 131 and the negative active material layer 104 on the substrate 111 facing the positive active material layer, an electrolyte layer 105 is disposed which is made of a glass fiber mat or the like impregnated with an electrolyte such as sulfuric acid.

The negative electrode lead layer 102 on the first end plate 121 is provided with a negative electrode terminal 108 electrically conductive to the outside of the first end plate 121. The positive electrode lead layer 101 on the second end plate 131 is provided with a positive electrode terminal 107 electrically conductive to the outside of the second end plate 131.

In other words, the bipolar battery 1 according to the first embodiment includes: the plurality of cell members 150 each including the positive electrode 151 having the positive active material layer 103, the negative electrode 152 having the negative active material layer 104, and the electrolyte layer 105 interposed between the positive electrode 151 and the negative electrode 152; and the plurality of frame units (the plurality of internal frame units 110, the first end frame unit 120, and the second end frame unit 130) forming the plurality of cells C individually housing the plurality of cell members 150.

The cell members 150 adjacent to each other in the stacking direction are electrically connected to each other in series. Therefore, the substrate 111 interposed between the cell members 150 adjacent to each other in the stacking direction includes a means for electrically connecting the positive electrode lead layer 101 and the negative electrode lead layer 102.

The joining surfaces 112a of the rims 112 of the internal frame units 110 adjacent to each other, the joining surface 122a of the rim 122 of the first end frame unit 120 and the joining surface 112a of the rim 112 of the internal frame unit 110 adjacent to each other, and the joining surface 132a of the rim 132 of the second end frame unit 130 and the joining surface 112a of the rim 112 of the internal frame unit 110 adjacent to each other are joined to each other by an adhesive or vibration welding.

In the vibration welding, for example, when the joining surfaces 112a of the rims 112 of the internal frame units 110 adjacent to each other are joined to each other, one joining surface 112a is pressed against the other joining surface 112a and vibrated to generate frictional heat, thereby melting the one joining surface 112a and the other joining surface 112a.

In the bipolar battery 1 configured as described above, heat generated in the positive active material layer 103 and the negative active material layer 104 of the cell member 150 by a battery reaction remains inside the battery unless an appropriate transmission path to the outside is provided, and the cell member 150 may be damaged by the heat, and the charge and discharge characteristics may be deteriorated.

Therefore, in the bipolar battery 1 according to the first embodiment, on the outer side surfaces of all the plurality of frame units (the internal frame unit 110, the first end frame unit 120, and the second end frame unit 130), recesses 160 are formed which open to the outer side surfaces. Specifically, on the outer side surface of the rim 112 of each internal frame unit 110, the outer side surface of the rim 122 of the first end frame unit 120, and the outer side surface of the rim 132 of the second end frame unit 130, the recesses 160 are formed which open to the outer side surfaces.

As illustrated in FIG. 2 (only two recesses 160 are illustrated in FIG. 2), four recesses 160 formed on the outer side surface of the rim 112 of each internal frame unit 110 are formed in a frame portion of each of the quadrangular frame-shaped (picture frame-shaped) rims 112.

Each recess 160 is formed in a rectangular shape elongated in the direction in which the frame portion of the rim 112 extends, has a length L, a depth D, and a stacking direction width W, and is formed so as to leave four corner portions 113 of the quadrangular frame-shaped rim 112.

The length L, the depth D, and the stacking direction width W of each recess 160 are appropriately determined in consideration of the heat dissipation characteristics, the mechanical strength, and the liquid leakage prevention performance, which will be described below, in the rim 112.

In the bipolar battery 1 according to the first embodiment, the thickness of the substrate 111 is set to 1 to 10 mm, a height h of the rim 112 is set to 5 to 20 mm, a length d of the rim 112 is set to 100 to 500 mm, a joining width B, which will be described below, is set to 1 to 20 mm, the length L of each recess 160 is set to 90 to 490 mm, the stacking direction width W of each recess 160 is set to 3 to 16 mm, and the depth D of each recess 160 is set to 0.5 to 15 mm.

Note that each recess 160 is formed so as to leave the four corner portions 113 of the quadrangular frame-shaped rim 112, but one recess 160 may be formed so as to surround the entire circumference of the quadrangular frame-shaped rim 112 by also forming the recess in the four corner portions 113.

As with the recess 160 of the rim 112, each of the recesses 160 formed on the outer side surface of the rim 122 of the first end frame unit 120 and the outer side surface of the rim 132 of the second end frame unit 130 is also formed in a rectangular shape elongated in the direction in which the frame portions of the rims 122 and 132 extend, has a predetermined length, depth, and stacking direction width, and is formed so as to leave the four corner portions of the quadrangular frame-shaped rims 122 and 132. The length, depth, and stacking direction width of each recess 160 are appropriately determined in consideration of the heat dissipation characteristics, the mechanical strength, and the liquid leakage prevention performance, which will be described below, in the rims 122 and 132.

The recesses 160 of the rims 122 and 132 may be formed such that one recess 160 is formed so as to surround the entire circumference of the quadrangular frame-shaped rims 122 and 132 by also forming the recesses in the four corner portions of the quadrangular frame-shaped rims 122 and 132.

As described above, according to the bipolar battery 1 according to the first embodiment, on the outer side surfaces of all of the plurality of frame units (the plurality of internal frame units 110, the first end frame unit 120, and the second end frame unit 130), the recesses 160 are formed which open to the outer side surfaces. Thus, the surface area exposed to the outer side surfaces of the frame units (the plurality of internal frame units 110, the first end frame unit 120, and the second end frame unit 130) is increased, and the heat generated in the positive active material layer 103 and the negative active material layer 104 of the cell member 150 by a battery reaction can be appropriately dissipated to the outside from the recesses 160 of the frame units (the plurality of internal frame units 110, the first end frame unit 120, and the second end frame unit 130). Thus, it is possible to suppress deterioration of the charge and discharge characteristics due to heat remaining inside the battery.

Since it is only necessary to form, on the outer side surfaces of the frame units (the plurality of internal frame units 110, the first end frame unit 120, and the second end frame unit 130), the recess 160 which opens to the outer side surfaces, it is possible to simplify the configuration for achieving the heat dissipation function.

Therefore, according to the bipolar battery 1 according to the first embodiment, it is possible to provide the bipolar battery 1 capable of appropriately dissipating the heat generated in the cell member 150 to the outside by a simple configuration.

According to bipolar battery 1 according to the first embodiment, each of the plurality of frame units (the plurality of internal frame units 110, the first end frame unit 120, and the second end frame unit 130) includes the rims 112, 122, and 132 having joining surfaces 112a, 122a, and 132a facing each other in the stacking direction of cell members 150, in which the recesses 160 are formed on the outer side surfaces of the rims 112, 122, and 132 of all the plurality of frame units (the plurality of internal frame units 110, the first end frame unit 120, and the second end frame unit 130), so that the surface area exposed to the outer side surfaces of the rims 112, 122, and 132 is increased, and the heat generated in the positive active material layer 103 and the negative active material layer 104 of the cell member 150 by a battery reaction can be appropriately dissipated to the outside from the recesses 160 of the rims 112, 122, and 132. Thus, it is possible to suppress deterioration of the charge and discharge characteristics due to heat remaining inside the battery.

Since it is only necessary to form, on the outer side surfaces of the rims 112, 122, and 132, the recess 160 which opens to the outer side surfaces, it is possible to simplify the configuration for achieving the heat dissipation function.

In order to improve heat dissipation of heat generated inside a battery to the outside, the joining width B (see FIGS. 1 and 2) of the joining surfaces 112a, 122a, and 132a of the rims 112, 122, and 132 may be reduced. However, if the joining width B is reduced, the electrolyte from the electrolyte layer 105 is likely to leak out through the joining surfaces 112a, 122a, and 132a. Therefore, in order to ensure the liquid leakage prevention performance, it is not preferable to reduce the joining width B.

On the other hand, according to the bipolar battery 1 according to the first embodiment, the recesses 160 for ensuring heat dissipation are formed on the outer side surfaces of the rims 112, 122, and 132. Therefore, since the joining width B can be made large, the liquid leakage prevention performance of an electrolyte can be ensured.

As described above, according to the bipolar battery 1 according to the first embodiment, it is possible to suppress deterioration of the charge and discharge characteristics due to heat remaining inside the battery and to ensure the liquid leakage prevention performance of an electrolyte, and thus it is possible to achieve both high energy density and long-term reliability.

According to the bipolar battery 1 according to the first embodiment, since the recesses 160 are formed on the outer side surfaces of the rims 112, 122, and 132, the recesses 160 also function as thinning at the time of molding, and the formability of the frame units (the internal frame unit 110, the first end frame unit 120, and the second end frame unit 130) can be improved.

### Second Embodiment

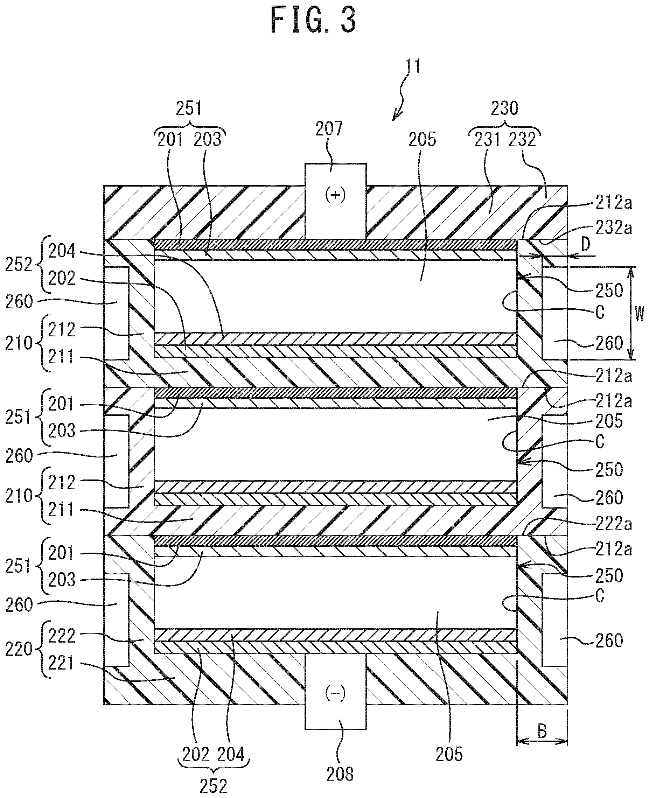

A bipolar battery according to a second embodiment of the present invention will now be described with reference to FIG. 3. FIG. 3 is a cross-sectional view illustrating a schematic configuration of the bipolar battery according to the second embodiment of the present invention.

The bipolar battery 11 illustrated in FIG. 3 is a bipolar lead battery in which a positive electrode 251 has a positive electrode lead layer 201 and a negative electrode 252 has a negative electrode lead layer 202, and includes a plurality of cell members 250, a plurality of internal frame units (frame units) 210, a first end frame unit (frame unit) 220, and a second end frame unit (frame unit) 230.

The plurality of cell members 250 is stacked at intervals in the stacking direction (the vertical direction in FIG. 3).

The plurality of internal frame units 210, the first end frame unit 220, and the second end frame unit 230 form a plurality of cells (spaces) C that individually houses the plurality of cell members 250.

Each internal frame unit 210 has a rectangular planar shape, and is formed of a substrate (bipolar plate) 211 in which the positive electrode 251 is disposed on one surface and the negative electrode 252 is disposed on the other surface, and, for example, a quadrangular frame-shaped (picture frame-shaped) rim 212 provided at the circumferential edge of the substrate 211. The substrate 211 of the internal frame unit 210 is disposed between the cell members 250 adjacent to each other in the stacking direction (the vertical direction in FIG. 3) of the cell members 250. Each rim 212 of each internal frame unit 210 includes joining surfaces 212a facing each other in the stacking direction (the vertical direction in FIG. 3) of the cell members 250.

The substrate 211 is integrally formed inside the rim 212. The internal frame unit 210 is made of a thermoplastic resin having sulfuric acid resistance (e.g., polyethylene, polypropylene, polystyrene, polyvinyl chloride, polymethyl methacrylate (acrylic resin), acrylonitrile-butadiene-styrene copolymer (ABS), polyamide (nylon), or polycarbonate). The substrate 211 is positioned at one end (lower end in FIG. 3) of the rim 212 in the thickness direction (the vertical direction in FIG. 3) of the rim. The rim 212 has a thickness greater than the thickness of the substrate 211. The rim 212 surrounds the side surface of the cell member 250.

The first end frame unit 220 is formed of a rectangular planar-shaped first end plate 221 and a quadrangular frame-shaped (picture frame-shaped) rim 222. The first end plate 221 is integrally formed inside the rim 222. The first end frame unit 220 is made of a thermoplastic resin having sulfuric acid resistance.

The first end frame unit 220 surrounds a side surface of the cell member 250 and a negative electrode 252 side at one end side (lower end side in FIG. 3) of the bipolar battery 1. The first end plate 221 surrounds the negative electrode 252 side of the cell member 250, and the rim 222 surrounds the side surface of the cell member 250.

The first end plate 221 is disposed in parallel to the substrate 211 of the internal frame unit 210, and the rim 222 is arranged so as to be in contact with the rim 212 of the internal frame unit 210 positioned adjacent thereto. In other words, the rim 122 includes a joining surface 222a facing the rim 212 of the internal frame unit 210 in the stacking direction (the vertical direction in FIG. 3) of the cell members 250.

The first end plate 221 has a thickness greater than the thickness of the substrate 211. The rim 222 has a thickness greater than the thickness of the first end plate 221. The first end plate 221 is set so as to be positioned at one end (lower end in FIG. 3) of the rim 222 in the thickness direction (the vertical direction in FIG. 3) of the rim.

The second end frame unit 230 is formed of a rectangular planar-shaped second end plate 231 and a rim 232 provided on the outer circumference of the second end plate 231. The second end plate 231 is integrally formed inside the rim 232. The second end frame unit 230 is made of a thermoplastic resin having sulfuric acid resistance.

The second end frame unit 230 surrounds the positive electrode 251 side of the cell member 250 at the other end side (the upper end side in FIG. 3) of the bipolar battery 11.

The second end plate 231 is disposed in parallel to the substrate 211 of the internal frame unit 210, and the rim 232 is arranged so as to be in contact with the rim 212 of the internal frame unit 210 positioned adjacent thereto. In other words, the rim 232 includes a joining surface 232a facing the rim 212 of the internal frame unit 210 in the stacking direction (the vertical direction in FIG. 3) of the cell members 250. The second end plate 231 has a thickness greater than the thickness of the substrate 211. The rim 232 has the same thickness as the thickness of the second end plate 231.

A positive electrode lead layer 201 is disposed on one surface of the substrate 211. A negative electrode lead layer 202 is disposed on the other surface of the substrate 211. A positive active material layer 203 is disposed on the positive electrode lead layer 201. A negative active material layer 204 is disposed on the negative electrode lead layer 202.

Between the positive active material layer 203 and the negative active material layer 204 facing each other, an electrolyte layer 205 is disposed which is made of a glass fiber mat or the like impregnated with an electrolyte such as sulfuric acid.

A negative electrode lead layer 202 is disposed on the other surface of the first end plate 221. A negative active material layer 204 is disposed on the negative electrode lead layer 202 on the first end plate 221. Between the negative active material layer 204 on the first end plate 221 and the positive active material layer 203 on the substrate 211 facing the negative active material layer, an electrolyte layer 205 is disposed which is made of a glass fiber mat or the like impregnated with an electrolyte such as sulfuric acid.

A positive electrode lead layer 201 is disposed on one surface of the second end plate 231. A positive active material layer 203 is disposed on the positive electrode lead layer 201 on the second end plate 231. Between the positive active material layer 203 on the second end plate 231 and the negative active material layer 204 on the substrate 211 facing the positive active material layer, an electrolyte layer 205 is disposed which is made of a glass fiber mat or the like impregnated with an electrolyte such as sulfuric acid.

The negative electrode lead layer 202 on the first end plate 221 is provided with a negative electrode terminal 208 electrically conductive to the outside of the first end plate 221. The positive electrode lead layer 201 on the second end plate 231 is provided with a positive electrode terminal 207 electrically conductive to the outside of the second end plate 231.

In other words, the bipolar battery 11 according to the second embodiment includes: the plurality of cell members 250 each including the positive electrode 251 having the positive active material layer 203, the negative electrode 252 having the negative active material layer 204, and the electrolyte layer 205 interposed between the positive electrode 251 and the negative electrode 252; and the plurality of frame units (the plurality of internal frame units 210, the first end frame unit 220, and the second end frame unit 230) forming the plurality of cells C individually housing the plurality of cell members 250.

The cell members 250 adjacent to each other in the stacking direction are electrically connected to each other in series. Therefore, the substrate 211 interposed between the cell members 250 adjacent to each other in the stacking direction includes a means for electrically connecting the positive electrode lead layer 201 and the negative electrode lead layer 202.

The joining surfaces 212a of the rims 212 of the internal frame units 210 adjacent to each other, the joining surface 222a of the rim 222 of the first end frame unit 220 and the joining surface 212a of the rim 212 of the internal frame unit 210 adjacent to each other, and the joining surface 232a of the rim 232 of the second end frame unit 230 and the joining surface 212a of the rim 212 of the internal frame unit 210 adjacent to each other are joined to each other by an adhesive or vibration welding.

In the bipolar battery 11 configured as described above, heat generated in the positive active material layer 203 and the negative active material layer 204 of the cell member 250 by a battery reaction remains inside the battery unless an appropriate transmission path to the outside is provided, and the cell member 250 may be damaged by the heat, and the charge and discharge characteristics may be deteriorated.

Therefore, in the bipolar battery 11 according to the second embodiment, on the outer side surfaces of the frame units (the internal frame unit 210 and the first end frame unit 220), recesses 260 are formed which open to the outer side surfaces. Specifically, on the outer side surface of the rim 212 of each internal frame unit 210 and the outer side surface of the rim 222 of the first end frame unit 220, the recesses 260 are formed which open to the outer side surfaces.

Although not illustrated in the drawings, four recesses 260 formed on the outer side surface of the rim 212 of each internal frame unit 210 are formed in a frame portion of each of the quadrangular frame-shaped (picture frame-shaped) rims 212.

Each recess 260 is formed in a rectangular shape elongated in the direction in which the frame portion of the rim 212 extends, has a length L (not illustrated), a depth D, and a stacking direction width W as in FIG. 1, and is formed so as to leave four corner portions (not illustrated) of the quadrangular frame-shaped rim 212.

The length L, the depth D, and the stacking direction width W of each recess 260 are appropriately determined in consideration of the heat dissipation characteristics, the mechanical strength, and the liquid leakage prevention performance, which will be described below, in the rim 212.

In the bipolar battery 11 according to the second embodiment, the thickness of the substrate 211 is set to 1 to 10 mm, a height of the rim 212 is set to 5 to 20 mm, the length of the rim 212 is set to 100 to 500 mm, a joining width B, which will be described below, is set to 1 to 20 mm, the length L of each recess 260 is set to 90 to 490 mm, the stacking direction width W of each recess 260 is set to 3 to 16 mm, and the depth D of each recess 260 is set to 0.5 to 15 mm.

Note that each recess 260 is formed so as to leave the four corner portions of the quadrangular frame-shaped rim 212, but one recess 260 may be formed so as to surround the entire circumference of the quadrangular frame-shaped rim 212 by also forming the recess in the four corner portions.

As with the recess 260 of the rim 212, each of the recesses 260 formed on the outer side surface of the rim 222 of the first end frame unit 220 is also formed in a rectangular shape elongated in the direction in which the frame portion of the rim 222 extends, has a predetermined length, depth, and stacking direction width, and is formed so as to leave the four corner portions of the quadrangular frame-shaped rim 222. The length, the depth, and the stacking direction width of each recess 260 are appropriately determined in consideration of the heat dissipation characteristics, the mechanical strength, and the liquid leakage prevention performance, which will be described below, in the rim 222.

The recess 260 of the rim 222 may be formed such that one recess 260 is formed so as to surround the entire circumference of the quadrangular frame-shaped rim 222 by also forming the recess in the four corner portions of the quadrangular frame-shaped rim 222.

As described above, according to the bipolar battery 11 according to the second embodiment, on the outer side surfaces of some frame units (the plurality of internal frame units 210 and the first end frame unit 220) among the plurality of frame units (the plurality of internal frame units 110, the first end frame unit 220, and the second end frame unit 230), the recesses 260 are formed which open to the outer side surfaces. Thus, the surface area exposed to the outer side surfaces of the frame units (the plurality of internal frame units 210 and the first end frame unit 220) is increased, and the heat generated in the positive active material layer 203 and the negative active material layer 204 of the cell member 250 by a battery reaction can be appropriately dissipated to the outside from the recesses 260 of the frame units (the plurality of internal frame units 210 and the first end frame unit 220). Thus, it is possible to suppress deterioration of the charge and discharge characteristics due to heat remaining inside the battery.

Since it is only necessary to form, on the outer side surfaces of the frame units (the plurality of internal frame units 210 and the first end frame unit 220), the recess 260 which opens to the outer side surfaces, it is possible to simplify the configuration for achieving the heat dissipation function.

Therefore, according to the bipolar battery 11 according to the second embodiment, it is possible to provide the bipolar battery 11 capable of appropriately dissipating the heat generated in the cell member 250 to the outside by a simple configuration.

According to bipolar battery 11 according to the second embodiment, each of the plurality of frame units (the plurality of internal frame units 210, the first end frame unit 220, and the second end frame unit 230) includes the rims 212, 222, and 232 having joining surfaces 212a, 222a, and 232a facing each other in the stacking direction of cell members 250, in which the recesses 260 are formed on the outer side surfaces of the rims 212 and 222 of some frame units (the plurality of internal frame units 210 and the first end frame unit 220) among the plurality of frame units (the plurality of internal frame units 210 and the first end frame unit 220), so that the surface area exposed to the outer side surfaces of the rims 212 and 222 is increased, and the heat generated in the positive active material layer 203 and the negative active material layer 204 of the cell member 250 by a battery reaction can be appropriately dissipated to the outside from the recesses 260 of the rims 212 and 222. Thus, it is possible to suppress deterioration of the charge and discharge characteristics due to heat remaining inside the battery.

Since it is only necessary to form, on the outer side surfaces of the rims 212 and 222, the recess 260 which opens to the outer side surfaces, it is possible to simplify the configuration for achieving the heat dissipation function.

Also in the bipolar battery 11 according to the second embodiment, the recesses 260 for ensuring heat dissipation are formed on the outer side surfaces of the rims 212 and 222. Therefore, since the joining width B (see FIG. 3) can be made large, the liquid leakage prevention performance of an electrolyte can be ensured.

As described above, also in the bipolar battery 11 according to the second embodiment, it is possible to suppress deterioration of the charge and discharge characteristics due to heat remaining inside the battery, and to ensure the liquid leakage prevention performance of an electrolyte, and thus it is possible to achieve both high energy density and long-term reliability.

Also in the bipolar battery 11 according to the second embodiment, since the recesses 260 are formed on the outer side surfaces of the rims 212 and 222, the recesses 260 also function as thinning at the time of molding, and the formability of the frame units (the internal frame unit 110 and the first end frame unit 120) can be improved.

### Third Embodiment

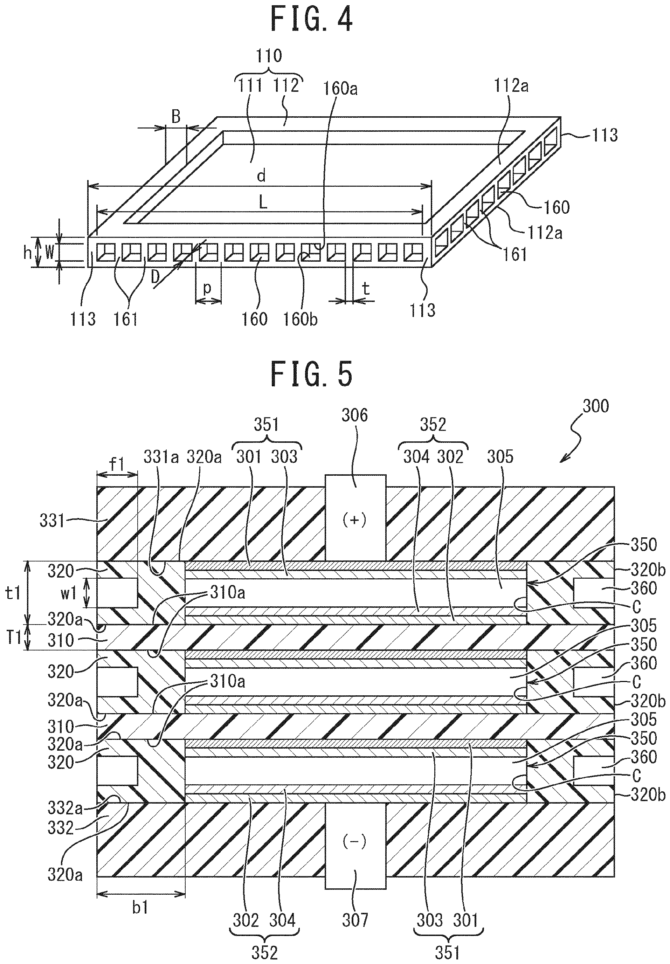

A bipolar battery according to a third embodiment of the present invention will now be described with reference to FIG. 4. FIG. 4 is a perspective view of an internal frame unit used in the bipolar battery according to the third embodiment of the present invention.

The bipolar battery according to the third embodiment of the present invention has the same basic configuration as that of the bipolar battery 1 according to the first embodiment illustrated in FIG. 1, but differs in the configuration of the recesses 160 formed on the outer side surface of the rim 112 of each internal frame unit 110, the outer side surface of the rim 122 of the first end frame unit 120, and the outer side surface of the rim 132 of the second end frame unit 130.

As with the recess 160 of the first embodiment, as illustrated in FIG. 4 (only two recesses 160 are illustrated in FIG. 4), four recesses 160 formed on the rim 112 of the internal frame unit 110 used in the bipolar battery according to the third embodiment of the present invention are formed in a frame portion of each of the quadrangular frame-shaped (picture frame-shaped) rims 112.

As with the recess 160 of the first embodiment, each recess 160 is formed in a rectangular shape elongated in the direction in which the frame portion of the rim 112 extends, has a length L, a depth D, and a stacking direction width W, and is formed so as to leave four corner portions 113 of the quadrangular frame-shaped rim 112.

However, the recess 160 of the third embodiment is different from the recess 160 of the first embodiment, and includes a plurality of reinforcing ribs 161 extending in the stacking direction of the cell members 150 connecting between open end edges 160a and 160b of the recess 160.

The plurality of reinforcing ribs 161 each has a width t and is disposed at a predetermined pitch p along the longitudinal direction of the recess 160. Each reinforcing rib 161 extends from the open end edges 160a and 160b of the recess 160 to the bottom surface.

As with the recess 160 formed on the rim 112 of the internal frame unit 110, although not illustrated in the drawings, the recesses 160 formed on the outer side surface of the rim 122 of the first end frame unit 120 and the outer side surface of the rim 132 of the second end frame unit 130 also include a plurality of reinforcing ribs extending in the stacking direction of the cell members 150 connecting between the open end edges of the recess 160. Similarly, the plurality of reinforcing ribs each has a width t and is disposed at a predetermined pitch p along the longitudinal direction of the recess 160. Each reinforcing rib extends from the open end edges of the recess 160 to the bottom surface.

As described above, according to the bipolar battery according to the third embodiment of the present invention, provided in the recess 160 is the reinforcing rib 161 extending in the stacking direction of the cell members 150 connecting between the open end edges 160a and 160b of the recess 160. Thus, the surface area exposed to the outer side surfaces of the rims 112, 122, and 132 is increased compared to the recess 160 according to the first embodiment, and the heat generated in the positive active material layer 103 and the negative active material layer 104 of the cell member 150 by a battery reaction can be more effectively dissipated to the outside from the recess 160 of the rims 112, 122, and 132.

By providing, in the recess 160, the reinforcing rib 161 extending in the stacking direction of the cell members 150 connecting between the open end edges 160a and 160b of the recess 160, it is possible to improve the mechanical strength when the frame units (the internal frame unit 210, the first end frame unit 220, and the second end frame unit 230) are joined in the stacking direction at the joining surfaces 112a, 122a, and 132a. In particular, when the joining at the joining surfaces 112a, 122a, and 132a is performed by vibration welding, the rims 112, 122, and 132 are pressed in the stacking direction, and thus the mechanical strength is improved by providing the reinforcing rib 161 extending in the stacking direction of the cell members 150 connecting between the open end edges of the recesses 160, which results in great practical benefits.

Note that the number, the installation pitch P, and the width t of the reinforcing ribs 161 provided in the recess 160 are appropriately determined in consideration of the heat dissipation characteristics and the mechanical strength in 112, 122, and 132.

In the bipolar battery according to the third embodiment, the thickness of the substrate 111 is set to 1 to 10 mm, a height h of the rim 112 is set to 5 to 20 mm, a length d of the rim 112 is set to 100 to 500 mm, a joining width B is set to 1 to 20 mm, the length L of each recess 160 is set to 90 to 490 mm, the stacking direction width W of each recess 160 is set to 3 to 16 mm, and the depth D of each recess 160 is set to 0.5 to 15 mm.

The width t of the reinforcing rib 161 is set to 1 to 10 mm, and the installation pitch p of the reinforcing rib 161 is set to 3 to 50 mm.

### Fourth Embodiment

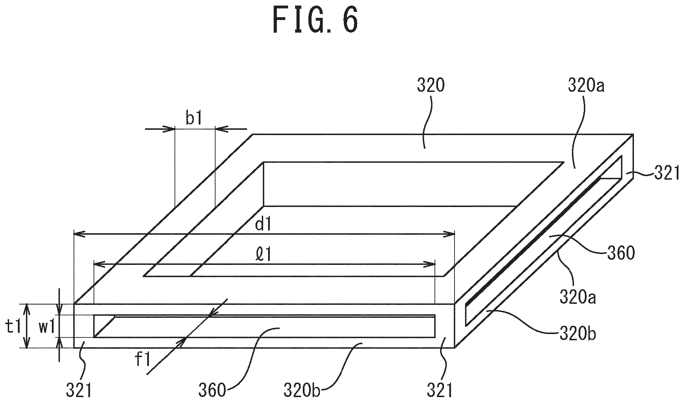

A bipolar battery according to a fourth embodiment of the present invention will be described with reference to FIGS. 5 and 6.

A bipolar battery 300 illustrated in FIG. 5 is a bipolar lead storage battery in which a positive electrode 351 has a positive electrode lead layer 301 and a negative electrode 352 has a negative electrode lead layer 302, and includes a plurality of (three in the present embodiment) cell members 350, and a plurality of frame units (a plurality of (two in the present embodiment) bipolar plates 310, a first end plate 331, a second end plate 332, and a plurality of (three in the present embodiment) spacers 320) forming a plurality of cells (spaces) C individually housing the plurality of (three in the present embodiment) cell members 350.

The plurality of (three in the present embodiment) cell members 350 is stacked at intervals in the stacking direction (the vertical direction in FIG. 5). As illustrated in FIG. 5, each cell member 350 includes a positive electrode 351 having a positive active material layer 303, a negative electrode 352 having a negative active material layer 304, and an electrolyte layer 305 interposed between the positive electrode 351 and the negative electrode 352.

The plurality of frame units includes: the plurality of (two in the present embodiment) bipolar plates 310 disposed between the cell members 350 adjacent to each other in the stacking direction; the first end plate 331 disposed at one end (upper end in FIG. 5) in the stacking direction of the plurality of cell members 350; the second end plate 332 disposed at the other end (lower end in FIG. 5) in the stacking direction of the plurality of cell members 350; and the plurality of (three in the present embodiment) spacers 320 disposed between the bipolar plates 310 adjacent to each other in the stacking direction, between the first end plate 331 and the bipolar plate 310, and between the second end plate 332 and the bipolar plate 310.

The plurality of (three in the present embodiment) cells C individually housing the plurality of (three in the present embodiment) cell members 350 is formed by the plurality of (two in the present embodiment) bipolar plates 310, the first end plate 331 and the second end plate 332, and the plurality of (three in the present embodiment) spacers 320.

Each bipolar plate 310 has a rectangular planar shape, and has a flat plate shape in which the negative electrode 352 is disposed on one surface (upper surface in FIG. 5) in the stacking direction and the positive electrode 351 is disposed on the other surface (lower surface in FIG. 5) in the stacking direction. Each bipolar plate 310 is disposed between the cell members 350 adjacent to each other in the stacking direction (the vertical direction in FIG. 5) of the cell members 350. Each bipolar plate 310 includes a joining surface 310a at each of an outer circumference portion of the negative electrode 352 on one surface in the stacking direction and an outer circumferential portion of the positive electrode 351 on the other surface in the stacking direction. The joining surface 310a on one surface side in the stacking direction of the bipolar plate 310 is in contact with the spacer 320 adjacent to each other at the one surface side in the stacking direction of the bipolar plate 310, and the joining surface 310a on the other surface side in the stacking direction of the bipolar plate 310 is in contact with the spacer 320 adjacent to each other at the other surface side in the stacking direction of the bipolar plate 310. In other words, each bipolar plate 310 includes two joining surfaces 310a facing the two spacers 320 in the stacking direction of the cell members 350. A plate thickness T1 of each bipolar plate 310 is set as appropriate.

Each bipolar plate 310 is made of a thermoplastic resin having sulfuric acid resistance (e.g., polyethylene, polypropylene, polystyrene, polyvinyl chloride, polymethyl methacrylate (acrylic resin), acrylonitrile-butadiene-styrene copolymer (ABS), polyamide (nylon), or polycarbonate).

The first end plate 331 is disposed at one end (upper end in FIG. 5) in the stacking direction of the plurality of cell members 350, and has a flat plate shape having a rectangular planar shape. The first end plate 331 is made of a thermoplastic resin having sulfuric acid resistance. The first end plate 331 has a plate thickness greater than the plate thickness T1 of the bipolar plate 310.

The first end plate 331 covers the positive electrode 351 of the cell member 350 at one end side (upper end side in FIG. 5) in the stacking direction of the bipolar battery 300.

The first end plate 331 is disposed in parallel to the bipolar plate 310, and includes a joining surface 331a at the outer circumference portion of the other surface (lower surface in FIG. 5) in the stacking direction of the first end plate. The joining surface 331a is in contact with the spacer 320 adjacent to each other at the other surface side in the stacking direction of the first end plate 331. In other words, the first end plate 331 includes the joining surface 331a facing the spacer 320 in the stacking direction of the cell members 350.

The second end plate 332 is disposed at the other end (lower end in FIG. 5) in the stacking direction of the plurality of cell members 350, and has a flat plate shape having a rectangular planar shape. The second end plate 332 is made of a thermoplastic resin having sulfuric acid resistance. The second end plate 332 has a plate thickness greater than the plate thickness T1 of a bipolar plate 310.

The second end plate 332 covers the negative electrode 352 of the cell member 350 at the other end side (lower end side in FIG. 5) in the stacking direction of the bipolar battery 300.

The second end plate 332 is disposed in parallel to the bipolar plate 310, and includes a joining surface 332a at the outer circumference portion of one surface (upper surface in FIG. 5) in the stacking direction of the second end plate. The joining surface 332a is in contact with the spacer 320 adjacent to each other at one surface side in the stacking direction of the second end plate 332. In other words, the second end plate 332 includes the joining surface 332a facing the spacer 320 in the stacking direction of the cell members 350.

The spacers 320 are respectively disposed between the bipolar plates 310 adjacent to each other in the stacking direction, between the first end plate 331 and the bipolar plate 310, and between the second end plate 332 and the bipolar plate 310.

The spacer 320 disposed between the bipolar plates 310 adjacent to each other in the stacking direction is formed in a quadrangular frame shape so as to surround the side surface of the cell member 350. The spacer 320 is made of a thermoplastic resin having sulfuric acid resistance. The spacer 320 has a plate thickness t1 greater than the plate thickness T1 of the bipolar plate 310.

The spacer 320 is disposed in parallel to the bipolar plate 310, and is disposed such that one surface (upper surface in FIG. 5) in the stacking direction is in contact with the bipolar plate 310 adjacent to each other at one side in the stacking direction. The spacer 320 is disposed such that the other surface (lower surface in FIG. 5) in the stacking direction is in contact with the bipolar plate 310 adjacent to each other at the other side in the stacking direction. In other words, the spacer 320 includes two joining surfaces 320a facing the two bipolar plates 310 in the stacking direction of the cell members 350.

The spacer 320 disposed between the first end plate 331 and the bipolar plate 310 is formed in a quadrangular frame shape so as to surround the side surface of the cell member 350. The spacer 320 is made of a thermoplastic resin having sulfuric acid resistance. The spacer 320 has a plate thickness t1 greater than the plate thickness T1 of the bipolar plate 310.

The spacer 320 is disposed in parallel to the bipolar plate 310, and is disposed such that one surface (upper surface in FIG. 5) in the stacking direction is in contact with the first end plate 331 adjacent to each other at one side in the stacking direction. The spacer 320 is disposed such that the other surface (lower surface in FIG. 5) in the stacking direction is in contact with the bipolar plate 310 adjacent to each other at the other side in the stacking direction. In other words, the spacer 320 includes two joining surfaces 320a facing the first end plate 331 and the bipolar plate 310 in the stacking direction (the vertical direction in FIG. 5) of the cell members 350.

Further, the spacer 320 disposed between the second end plate 332 and the bipolar plate 310 is formed in a quadrangular frame shape so as to surround the side surface of the cell member 350. The spacer 320 is made of a thermoplastic resin having sulfuric acid resistance. The spacer 320 has a plate thickness t1 greater than the plate thickness T1 of the bipolar plate 310.

The spacer 320 is disposed in parallel to the bipolar plate 310, and is disposed such that one surface (upper surface in FIG. 5) in the stacking direction is in contact with the bipolar plate 310 adjacent to each other at one side in the stacking direction. The spacer 320 is disposed such that the other surface (lower surface in FIG. 5) in the stacking direction is in contact with the second end plate 332 adjacent to each other at the other side in the stacking direction. In other words, the spacer 320 includes two joining surfaces 320a facing the bipolar plate 310 and the second end plate 332 in the stacking direction (the vertical direction in FIG. 5) of the cell members 350.

A negative electrode lead layer 302 is disposed on one surface in the stacking direction of the bipolar plate 310. A positive electrode lead layer 301 is disposed on the other surface in the stacking direction of the bipolar plate 310. A negative active material layer 304 is disposed on the negative electrode lead layer 302 to form a negative electrode 352. On the other hand, a positive active material layer 303 is disposed on the positive electrode lead layer 301 to form a positive electrode 351.

Between the positive active material layer 303 and the negative active material layer 304 facing each other, an electrolyte layer 305 is disposed which is made of a glass fiber mat or the like impregnated with an electrolyte such as sulfuric acid.

A positive electrode lead layer 301 is disposed on the other surface in the stacking direction of the first end plate 331. A positive active material layer 303 is disposed on the positive electrode lead layer 301 on the first end plate 331 to form a positive electrode 351. Between the positive active material layer 303 on the first end plate 331 and the negative active material layer 304 of the bipolar plate 310 facing the positive active material layer, an electrolyte layer 305 is disposed which is made of a glass fiber mat or the like impregnated with an electrolyte such as sulfuric acid.

A negative electrode lead layer 302 is disposed on one surface in the stacking direction of the second end plate 332. A negative active material layer 304 is disposed on the negative electrode lead layer 302 on the second end plate 332 to form a negative electrode 352. Between the negative active material layer 304 on the second end plate 332 and the positive active material layer 303 of the bipolar plate 310 facing the negative active material layer, an electrolyte layer 305 is disposed which is made of a glass fiber mat or the like impregnated with an electrolyte such as sulfuric acid.

The positive electrode lead layer 301 on the first end plate 331 is provided with a positive electrode terminal 306 electrically conductive to the outside of the first end plate 331. The negative electrode lead layer 302 on the second end plate 332 is provided with a negative electrode terminal 307 electrically conductive to the outside of the second end plate 332.

In other words, the bipolar battery 300 according to the fourth embodiment includes: the plurality of (three in the present embodiment) cell members 350 each including the positive electrode 351 having the positive active material layer 303, the negative electrode 352 having the negative active material layer 304, and the electrolyte layer 305 interposed between the positive electrode 351 and the negative electrode 352; and the plurality of frame units (the plurality of (two in the present embodiment) bipolar plates 310, the first end plate 331, the second end plate 332, and the plurality of (three in the present embodiment) spacers 320) forming the plurality of (three in the present embodiment) cells (spaces) C individually housing the plurality of (three in the present embodiment) cell members 350.

The plurality of frame units include: the plurality of (two in the present embodiment) bipolar plates 310 disposed between the cell members 350 adjacent to each other in the stacking direction; the pair of end plates (the first end plate 331 and the second end plate 332) disposed at one end and the other end in the stacking direction of the plurality of (three in the present embodiment) cell members 350; and the plurality of (three in the present embodiment) spacers 320 disposed between the bipolar plates 310 and 310 adjacent to each other in the stacking direction, between one end plate (the first end plate 331) of the pair of end plates (the first end plate 331 and the second end plate 332) and the bipolar plate 310, and between the other end plate (the second end plate 332) of the pair of end plates (the first end plate 331 and the second end plate 332) and the bipolar plate 310.

The plurality of (three in the present embodiment) cells C individually housing a plurality of (three in the present embodiment) cell members 350 is formed by the plurality of (two in the present embodiment) bipolar plates 310, the pair of end plates (the first end plate 331 and the second end plate 332), and the plurality of (three in the present embodiment) spacers 320.

The cell members 350 adjacent to each other in the stacking direction are electrically connected to each other in series. Therefore, the bipolar plate 310 interposed between the cell members 350 adjacent to each other in the stacking direction includes a means for electrically connecting the positive electrode lead layer 301 and the negative electrode lead layer 302.

The joining surface 331a of the first end plate 331 and the joining surface 320a of the spacer 320, the joining surface 310a of the bipolar plate 310 and the joining surface 320a of the spacer 320, and the joining surface 332a of the second end plate 332 and the joining surface 320a of the spacer 320 are joined to each other by an adhesive or vibration welding.

In the vibration welding, for example, when the joining surface 310a of the bipolar plate 310 and the joining surface 320a of the spacer 320 are joined to each other, for example, one joining surface 310a is pressed against the other joining surface 320a and vibrated to generate frictional heat, thereby melting one joining surface 310a and the other joining surface 320a.

In the bipolar battery 300 configured as described above, heat generated in the positive active material layer 303 and the negative active material layer 304 of the cell member 350 by a battery reaction remains inside the battery unless an appropriate transmission path to the outside is provided, and the cell member 350 may be damaged by the heat, and the charge and discharge characteristics may be deteriorated.

Therefore, in the bipolar battery 300 according to the fourth embodiment, on an outer side surface 320b of some frame units (the plurality of (three in the present embodiment) spacers 320) among the plurality of frame units (the plurality of (two in the present embodiment) bipolar plates 310, the pair of end plates (the first end plate 331 and the second end plate 332), and the plurality of (three in the present embodiment) spacers 320), a recess 360 is formed which opens to the outer side surface 320b. Specifically, on an outer side surface 320b of each of the plurality of spacers 320, the recess 360 is formed which opens to the outer side surface 320b.

As illustrated in FIG. 6 (only two recesses 360 are illustrated in FIG. 6), four recesses 360 formed on the outer side surface 320b of each spacer 320 are formed in a frame portion of each of the quadrangular frame-shaped spacers 320.

Each recess 360 is formed in a rectangular shape elongated in the direction in which the frame portion of the spacer 320 extends, and has a length l1, a depth f1, and a stacking direction width w1, and is formed so as to leave four corner portions 321 of the quadrangular frame-shaped spacer 320.

The length l1, the depth f1, and the stacking direction width w1 of each recess 360 are appropriately determined in consideration of the heat dissipation characteristics, the mechanical strength, and the liquid leakage prevention performance, which will be described below, in each spacer 320.

In the bipolar battery 300 according to the fourth embodiment, a plate thickness T1 of the bipolar plate 310 is set to 1 mm to 10 mm, a plate thickness t1 of the spacer 320 is set to 5 mm to 30 mm, a length d1 of the spacer 320 is set to 100 mm to 500 mm, a joining width b1, which will be described below, is set to 1 mm to 20 mm, the length l1 of each recess 160 is set to 90 mm to 490 mm, the depth f1 of each recess 160 is set to 0.5 mm to 15 mm, and the stacking direction width w1 of each recess 360 is set to 3 mm to 25 mm.

Note that each recess 360 is formed so as to leave the four corner portions 321 of the quadrangular frame-shaped spacer 320, but one recess 360 may be formed so as to surround the entire circumference of the quadrangular frame-shaped spacer 320 by also forming the recess in the four corner portions 321.

As described above, according to the bipolar battery 300 according to the fourth embodiment, on the outer side surfaces 320b of some frame units (the plurality of (three in the present embodiment) spacers 320) among the plurality of frame units (the plurality of (two in the present embodiment) bipolar plates 310, the pair of end plates (the first end plate 331 and the second end plate 332), and the plurality of (three in the present embodiment) spacers 320), the recesses 360 are formed which open to the outer side surfaces 320b. Thus, the surface area exposed to the outer side surfaces of some frame units is increased, and the heat generated in the positive active material layer 303 and the negative active material layer 304 of the cell member 350 by a battery reaction can be appropriately dissipated to the outside from the recesses 360 of some frame units. Thus, it is possible to suppress deterioration of the charge and discharge characteristics due to heat remaining inside the battery.

Since it is only necessary to form, on the outer side surfaces 320b of some frame units, the recess 360 which opens to the outer side surfaces 320b, it is possible to simplify the configuration for achieving the heat dissipation function.

Therefore, according to the bipolar battery 300 according to the fourth embodiment, it is possible to provide the bipolar battery 300 capable of appropriately dissipating the heat generated in the cell member 350 to the outside by a simple configuration.

According to the bipolar battery 300 according to the fourth embodiment, the plurality of frame units includes: the plurality of (two in the present embodiment) bipolar plates 310 disposed between the cell members 350 adjacent to each other in the stacking direction; the first end plate 331 disposed at one end (upper end in FIG. 5) in the stacking direction of the plurality of cell members 350; the second end plate 332 disposed at the other end (lower end in FIG. 5) in the stacking direction of the plurality of cell members 350; and the plurality of (three in the present embodiment) spacers 320 disposed between the bipolar plates 310 adjacent to each other in the stacking direction, between the first end plate 331 and the bipolar plate 310, and between the second end plate 332 and the bipolar plate 310. The plurality of (three in the present embodiment) cells C individually housing the plurality of (three in the present embodiment) cell members 350 is formed by the plurality of (two in the present embodiment) bipolar plates 310, the first end plate 331 and the second end plate 332, and the plurality of (three in the present embodiment) spacers 320. Each of the plurality of (two in the present embodiment) bipolar plates 310, the first end plate 331 and the second end plate 332, and the plurality of (three in the present embodiment) spacers 320 has the joining surfaces 310a, 331a, 332a, and 320a facing each other in the stacking direction of the cell members 350, and the recess 360 is formed on the outer side surface 320b of each of the plurality of spacers 320.

Thus, the surface area exposed to the outer side surfaces 320b of each spacer 320 is increased, and the heat generated in the positive active material layer 303 and the negative active material layer 304 of the cell member 350 by a battery reaction can be appropriately dissipated to the outside from the recess 360 of the spacer 320. Thus, it is possible to suppress deterioration of the charge and discharge characteristics due to heat remaining inside the battery.

Since it is only necessary to form, on the outer side surface 320b of the spacer 320, the recess 360 which opens to the outer side surface 320b, it is possible to simplify the configuration for achieving the heat dissipation function.

In order to improve heat dissipation of heat generated inside a battery to the outside, the joining width b1 (see FIGS. 5 and 6) of the joining surface 320a of each spacer 320, the joining surface 131a of the first end plate 331, and the joining surface 332a of the second end plate 332 may be reduced. However, if the joining width b1 is reduced, the electrolyte from the electrolyte layer 105 is likely to leak out through joining surfaces 120a, 131a, and 132a. Therefore, in order to ensure the liquid leakage prevention performance, it is not preferable to reduce the joining width b1.

On the other hand, according to the bipolar battery 300 according to the fourth embodiment, the recess 360 for ensuring heat dissipation is formed on the outer side surface 320b of the spacer 320. Therefore, since the joining width b1 can be made large, the liquid leakage prevention performance of an electrolyte can be ensured.

As described above, according to the bipolar battery 300 according to the fourth embodiment, it is possible to suppress deterioration of the charge and discharge characteristics due to heat remaining inside the battery, and to ensure the liquid leakage prevention performance of an electrolyte, and thus it is possible to achieve both high energy density and long-term reliability.

According to the bipolar battery 300 according to the fourth embodiment, since on the outer side surface 320b of each of the plurality of spacers 320, the recess 360 is formed which opens to the outer side surface 320b, the recess 360 also functions as thinning at the time of molding, and the formability of each spacer 320 can be improved.

### Fifth Embodiment

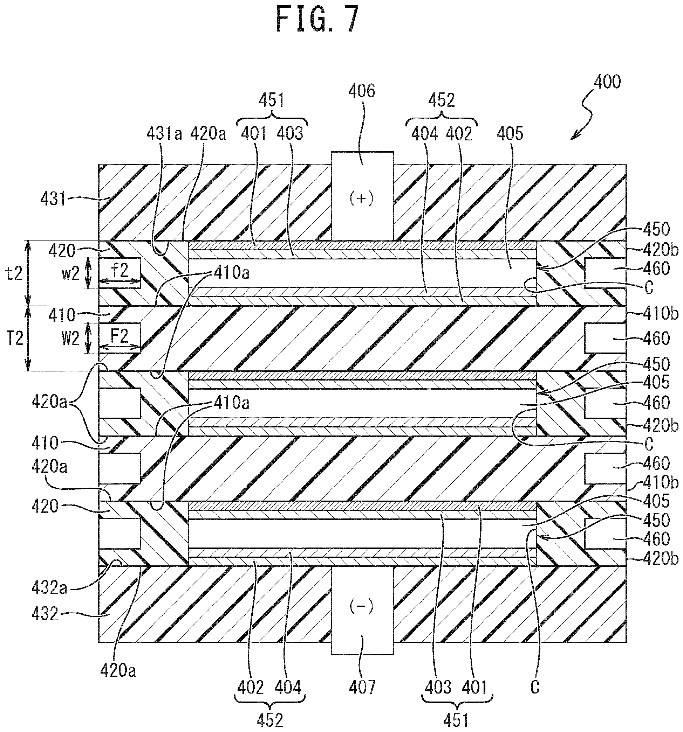

A bipolar battery according to a fifth embodiment of the present invention will now be described with reference to FIG. 7. FIG. 7 is a cross-sectional view illustrating a schematic configuration of a bipolar battery according to the fifth embodiment of the present invention.

A bipolar battery 400 illustrated in FIG. 7 includes a plurality of (three in the present embodiment) cell members 450, and a plurality of frame units (a plurality of (two in the present embodiment) bipolar plates 410, a first end plate 431, a second end plate 432, and a plurality of (three in the present embodiment) spacers 420) forming a plurality of cells (spaces) C individually housing the plurality of (three in the present embodiment) cell members 450.

The plurality of (three in the present embodiment) cell members 450 is stacked at intervals in the stacking direction (the vertical direction in FIG. 7). As illustrated in FIG. 7, each cell member 450 includes a positive electrode 451 having a positive active material layer 403, a negative electrode 452 having a negative active material layer 404, and an electrolyte layer 405 interposed between the positive electrode 451 and the negative electrode 452.

The plurality of frame units includes: the plurality of (two in the present embodiment) bipolar plates 410 disposed between the cell members 450 adjacent to each other in the stacking direction; the first end plate 431 disposed at one end (upper end in FIG. 7) in the stacking direction of the plurality of cell members 450; the second end plate 432 disposed at the other end (lower end in FIG. 7) in the stacking direction of the plurality of cell members 450; and the plurality of (three in the present embodiment) spacers 420 disposed between the bipolar plates 410 adjacent to each other in the stacking direction, between the first end plate 431 and the bipolar plate 410, and between the second end plate 432 and the bipolar plate 410.

The plurality of (three in the present embodiment) cells C individually housing the plurality of (three in the present embodiment) cell members 450 is formed by the plurality of (two in the present embodiment) bipolar plates 410, the first end plate 431 and the second end plate 432, and the plurality of (three in the present embodiment) spacers 420.

Each bipolar plate 410 has a rectangular planar shape, and has a flat plate shape in which the negative electrode 452 is disposed on one surface (upper surface in FIG. 7) in the stacking direction and the positive electrode 451 is disposed on the other surface (lower surface in FIG. 7) in the stacking direction. Each bipolar plate 410 is disposed between the cell members 450 adjacent to each other in the stacking direction (the vertical direction in FIG. 7) of the cell members 450. Each bipolar plate 410 includes a joining surface 410a at each of an outer circumference portion of the negative electrode 452 on one surface in the stacking direction and an outer circumference portion of the positive electrode 451 on the other surface in the stacking direction. The joining surface 410a on one surface side in the stacking direction of the bipolar plate 410 is in contact with the spacer 420 adjacent to each other at the one surface side in the stacking direction of the bipolar plate 410, and the joining surface 410a on the other surface side in the stacking direction of the bipolar plate 410 is in contact with the spacer 420 adjacent to each other at the other surface side in the stacking direction of the bipolar plate 410. In other words, each bipolar plate 410 includes two joining surfaces 410a facing the two spacers 420 in the stacking direction of the cell members 450. A plate thickness T2 of each bipolar plate 410 is set as appropriate, but in the present embodiment, is greater than the plate thickness T1 of the bipolar plate 410 in the first embodiment, and is approximately as thick as a plate thickness t2 of the spacer 420.

Each bipolar plate 410 is made of a thermoplastic resin having sulfuric acid resistance (e.g., polyethylene, polypropylene, polystyrene, polyvinyl chloride, polymethyl methacrylate (acrylic resin), acrylonitrile-butadiene-styrene copolymer (ABS), polyamide (nylon), or polycarbonate).

The first end plate 431 is disposed at one end (upper end in FIG. 7) in the stacking direction of the plurality of cell members 450, and has a flat plate shape having a rectangular planar shape. The first end plate 431 is made of a thermoplastic resin having sulfuric acid resistance. The first end plate 431 has a plate thickness greater than the plate thickness T2 of the bipolar plate 410.

The first end plate 431 covers the positive electrode 451 of the cell member 450 at one end side (upper end side in FIG. 7) in the stacking direction of the bipolar battery 400.

The first end plate 431 is disposed in parallel to the bipolar plates 410, and includes a joining surface 431a at the outer circumference portion of the other surface (lower surface in FIG. 7) in the stacking direction of the first end plate. The joining surface 431a is in contact with the spacer 420 adjacent to each other at the other surface side in the stacking direction of the first end plate 431. In other words, the first end plate 431 includes the joining surface 431a facing the spacer 420 in the stacking direction of the cell members 450.

The second end plate 432 is disposed at the other end (lower end in FIG. 7) in the stacking direction of the plurality of cell members 450, and has a flat plate shape having a rectangular planar shape. The second end plate 432 is made of a thermoplastic resin having sulfuric acid resistance. The second end plate 432 has a plate thickness greater than the plate thickness T2 of the bipolar plate 410.

The second end plate 432 covers the negative electrode 452 of the cell member 450 at the other end side (lower end side in FIG. 7) in the stacking direction of the bipolar battery 400.

The second end plate 432 is disposed in parallel to the bipolar plate 410, and includes a joining surface 432a at the outer circumference portion of one surface (upper surface in FIG. 7) in the stacking direction of the second end plate. The joining surface 432a is in contact with the spacer 420 adjacent to each other at one surface side in the stacking direction of the second end plate 432. In other words, the second end plate 432 includes the joining surface 432a facing the spacer 420 in the stacking direction of the cell members 450.

The spacers 420 are respectively disposed between the bipolar plates 410 adjacent to each other in the stacking direction, between the first end plate 431 and the bipolar plate 410, and between the second end plate 432 and the bipolar plate 410.

The spacer 420 disposed between the bipolar plates 410 adjacent to each other in the stacking direction is formed in a quadrangular frame shape so as to surround the side surface of the cell member 450. The spacer 420 is made of a thermoplastic resin having sulfuric acid resistance. The plate thickness t2 of the spacer 420 is approximately as thick as the plate thickness T2 of the bipolar plate 410.

The spacer 420 is disposed in parallel to the bipolar plate 410, and is disposed such that one surface (upper surface in FIG. 7) in the stacking direction is in contact with the bipolar plate 410 adjacent to each other at one side in the stacking direction. The spacer 420 is disposed such that the other surface (lower surface in FIG. 7) in the stacking direction is in contact with the bipolar plate 410 adjacent to each other at the other side in the stacking direction. In other words, the spacer 420 includes two joining surfaces 420a facing the two bipolar plates 410 in the stacking direction of the cell members 450.

The spacer 420 disposed between the first end plate 431 and the bipolar plate 410 is formed in a quadrangular frame shape so as to surround the side surface of the cell member 450. The spacer 420 is made of a thermoplastic resin having sulfuric acid resistance. The plate thickness t2 of the spacer 420 is approximately as thick as the plate thickness T2 of the bipolar plate 410.

The spacer 420 is disposed in parallel to the bipolar plate 410, and is disposed such that one surface (upper surface in FIG. 7) in the stacking direction is in contact with the first end plate 431 adjacent to each other at one side in the stacking direction. The spacer 420 is disposed such that the other surface (lower surface in FIG. 7) in the stacking direction is in contact with the bipolar plate 410 adjacent to each other at the other side in the stacking direction. In other words, the spacer 420 includes two joining surfaces 420a facing the first end plate 431 and the bipolar plate 410 in the stacking direction (the vertical direction in FIG. 7) of the cell members 450.

Further, the spacer 420 disposed between the second end plate 432 and the bipolar plate 410 is formed in a quadrangular frame shape so as to surround the side surface of the cell member 450. The spacer 420 is made of a thermoplastic resin having sulfuric acid resistance. The plate thickness t2 of the spacer 420 is approximately as thick as the plate thickness T2 of the bipolar plate 410.

The spacer 420 is disposed in parallel to the bipolar plate 410, and is disposed such that one surface (upper surface in FIG. 7) in the stacking direction is in contact with the bipolar plate 410 adjacent to each other at one side in the stacking direction. The spacer 420 is disposed such that the other surface (lower surface in FIG. 7) in the stacking direction is in contact with the second end plate 432 adjacent to each other at the other side in the stacking direction. In other words, the spacer 420 includes two joining surfaces 220a facing the bipolar plate 410 and the second end plate 432 in the stacking direction (the vertical direction in FIG. 7) of the cell members 450.

A negative electrode lead layer 402 is disposed on one surface in the stacking direction of the bipolar plate 410. A positive electrode lead layer 401 is disposed on the other surface in the stacking direction of the bipolar plate 410. A negative active material layer 404 is disposed on the negative electrode lead layer 402 to form a negative electrode 452. On the other hand, a positive active material layer 403 is disposed on the positive electrode lead layer 401 to form a positive electrode 451.

Between the positive active material layer 403 and the negative active material layer 404 facing each other, an electrolyte layer 405 is disposed which is made of a glass fiber mat or the like impregnated with an electrolyte such as sulfuric acid.

A positive electrode lead layer 401 is disposed on the other surface in the stacking direction of the first end plate 431. A positive active material layer 403 is disposed on the positive electrode lead layer 401 on the first end plate 431 to form a positive electrode 451. Between the positive active material layer 403 on the first end plate 431 and the negative active material layer 404 of the bipolar plate 410 facing the positive active material layer, an electrolyte layer 405 is disposed which is made of a glass fiber mat or the like impregnated with an electrolyte such as sulfuric acid.

A negative electrode lead layer 402 is disposed on one surface in the stacking direction of the second end plate 432. A negative active material layer 404 is disposed on the negative electrode lead layer 402 on the second end plate 432 to form a negative electrode 452. Between the negative active material layer 404 on the second end plate 432 and the positive active material layer 403 of the bipolar plate 410 facing the negative active material layer, an electrolyte layer 405 is disposed which is made of a glass fiber mat or the like impregnated with an electrolyte such as sulfuric acid.

The positive electrode lead layer 401 on the first end plate 431 is provided with a positive electrode terminal 406 electrically conductive to the outside of the first end plate 431. The negative electrode lead layer 402 on the second end plate 432 is provided with a negative electrode terminal 407 electrically conductive to the outside of the second end plate 432.

In other words, the bipolar battery 400 according to the fifth embodiment includes: the plurality of (three in the present embodiment) cell members 450 each including the positive electrode 451 having the positive active material layer 403, the negative electrode 452 having the negative active material layer 404, and the electrolyte layer 405 interposed between the positive electrode 451 and the negative electrode 452; and the plurality of frame units (the plurality of (two in the present embodiment) bipolar plates 410, the first end plate 431, the second end plate 432, and the plurality of (three in the present embodiment) spacers 420) forming the plurality of (three in the present embodiment) cells (spaces) C individually housing the plurality of (three in the present embodiment) cell members 450.

The plurality of frame units include: the plurality of (two in the present embodiment) bipolar plates 410 disposed between the cell members 450 adjacent to each other in the stacking direction; the pair of end plates (the first end plate 431 and the second end plate 432) disposed at one end and the other end in the stacking direction of the plurality of (three in the present embodiment) cell members 450; and the plurality of (three in the present embodiment) spacers 420 disposed between the bipolar plates 410 and 410 adjacent to each other in the stacking direction, between one end plate (the first end plate 431) of the pair of end plates (the first end plate 431 and the second end plate 432) and the bipolar plate 410, and between the other end plate (the second end plate 432) of the pair of end plates (the first end plate 431 and the second end plate 432) and the bipolar plate 410.

The plurality of (three in the present embodiment) cells C individually housing the plurality of (three in the present embodiment) cell members 450 is formed by the plurality of (two in the present embodiment) bipolar plates 410, the pair of end plates (the first end plate 431 and the second end plate 432), and the plurality of (three in the present embodiment) spacers 420.

The cell members 450 adjacent to each other in the stacking direction are electrically connected to each other in series. Therefore, the bipolar plate 410 interposed between the cell members 450 adjacent to each other in the stacking direction includes a means for electrically connecting the positive electrode lead layer 401 and the negative electrode lead layer 402.

The joining surface 431a of the first end plate 431 and the joining surface 420a of the spacer 420, the joining surface 410a of the bipolar plate 410 and the joining surface 420a of the spacer 420, and the joining surface 432a of the second end plate 432 and the joining surface 420a of the spacer 420 are joined to each other by an adhesive or vibration welding.

In the vibration welding, for example, when the joining surface 410a of the bipolar plate 410 and the joining surface 420a of the spacer 420 are joined to each other, for example, one joining surface 410a is pressed against the other joining surface 420a and vibrated to generate frictional heat, thereby melting one joining surface 410a and the other joining surface 420a.

In the bipolar battery 400 configured as described above, heat generated in the positive active material layer 403 and the negative active material layer 404 of the cell member 450 by a battery reaction remains inside the battery unless an appropriate transmission path to the outside is provided, and the cell member 450 may be damaged by the heat, and the charge and discharge characteristics may be deteriorated.

Therefore, in the bipolar battery 400 according to the fifth embodiment, on an outer side surface 320b of some frame units (the plurality of (three in the present embodiment) spacers 420) among the plurality of frame units (the plurality of (two in the present embodiment) bipolar plates 410, the pair of end plates (the first end plate 431 and the second end plate 432), and the plurality of (three in the present embodiment) spacers 420), a recess 360 is formed which opens to the outer side surface 320b. Specifically, on an outer side surface 420b of each of the plurality of spacers 420, the recess 460 is formed which opens to the outer side surface 420b.

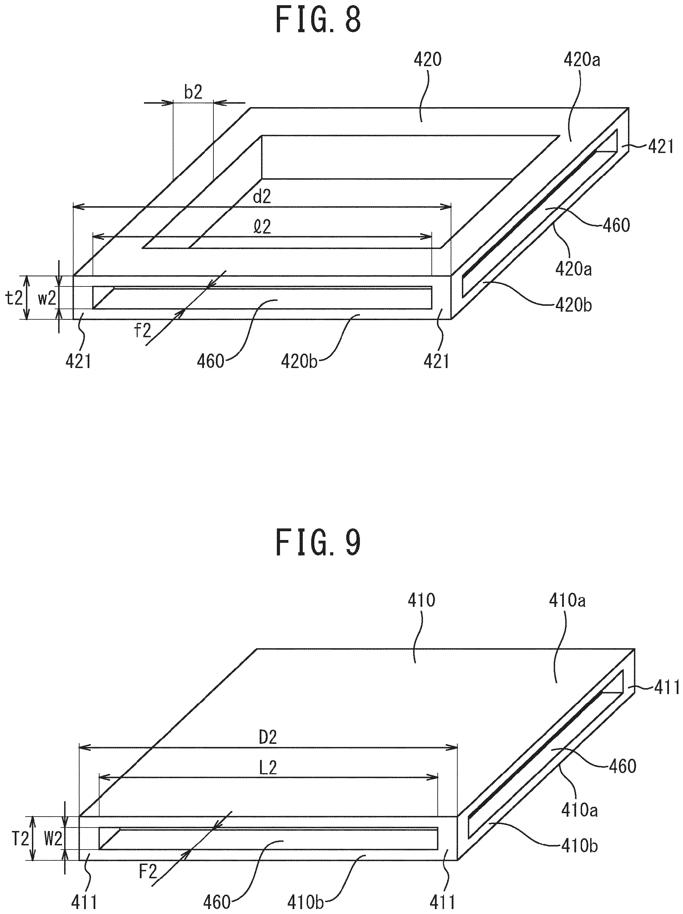

As illustrated in FIG. 8 (only two recesses 460 are illustrated in FIG. 8), four recesses 460 formed on the outer side surface 420b of each spacer 420 are formed in a frame portion of each of the quadrangular frame-shaped spacers 420.

Each recess 460 is formed in a rectangular shape elongated in the direction in which the frame portion of the spacer 420 extends, and has a length l2, a depth f2, and a stacking direction width w2, and is formed so as to leave four corner portions 421 of the quadrangular frame-shaped spacer 420.

The length l2, the depth f2, and the stacking direction width w2 of each recess 460 are appropriately determined in consideration of the heat dissipation characteristics, the mechanical strength, and the liquid leakage prevention performance, which will be described below, in each spacer 420.

In the bipolar battery 400 according to the fifth embodiment, a plate thickness t2 of the spacer 420 is set to 5 mm to 30 mm, a length d2 of the spacer 420 is set to 100 mm to 500 mm, a joining width b2, which will be described below, is set to 1 mm to 20 mm, the length l2 of each recess 460 is set to 90 mm to 490 mm, the depth f2 of each recess 460 is set to 0.5 mm to 15 mm, and the stacking direction width w2 of each recess 460 is set to 3 mm to 25 mm.

Note that each recess 460 is formed so as to leave the four corner portions 421 of the quadrangular frame-shaped spacer 420, but one recess 460 may be formed so as to surround the entire circumference of the quadrangular frame-shaped spacer 420 by also forming the recess in the four corner portions 421.

As described above, according to the bipolar battery 400 according to the fifth embodiment, on the outer side surfaces 420b of some frame units (the plurality of (three in the present embodiment) spacers 420) among the plurality of frame units (the plurality of (two in the present embodiment) bipolar plates 410, the pair of end plates (the first end plate 431 and the second end plate 432), and the plurality of (three in the present embodiment) spacers 420), the recesses 460 are formed which open to the outer side surfaces 420b. Thus, the surface area exposed to the outer side surfaces of some frame units is increased, and the heat generated in the positive active material layer 403 and the negative active material layer 404 of the cell member 450 by a battery reaction can be appropriately dissipated to the outside from the recesses 460 of some frame units. Thus, it is possible to suppress deterioration of the charge and discharge characteristics due to heat remaining inside the battery.

Since it is only necessary to form, on the outer side surfaces 420b of some frame units, the recess 460 which opens to the outer side surfaces 420b, it is possible to simplify the configuration for achieving the heat dissipation function.

Therefore, according to the bipolar battery 400 according to the fifth embodiment, it is possible to provide the bipolar battery 400 capable of appropriately dissipating the heat generated in the cell member 450 to the outside by a simple configuration.

According to the bipolar battery 400 according to the fifth embodiment, the plurality of frame units includes: the plurality of (two in the present embodiment) bipolar plates 410 disposed between the cell members 450 adjacent to each other in the stacking direction; the first end plate 431 disposed at one end (upper end in FIG. 7) in the stacking direction of the plurality of cell members 450; the second end plate 432 disposed at the other end (lower end in FIG. 7) in the stacking direction of the plurality of cell members 450; and the plurality of (three in the present embodiment) spacers 420 disposed between the bipolar plates 410 adjacent to each other in the stacking direction, between the first end plate 431 and the bipolar plate 410, and between the second end plate 432 and the bipolar plate 410. The plurality of (three in the present embodiment) cells C individually housing the plurality of (three in the present embodiment) cell members 450 is formed by the plurality of (two in the present embodiment) bipolar plates 410, the first end plate 431 and the second end plate 432, and the plurality of (three in the present embodiment) spacers 420. Each of the plurality of (two in the present embodiment) bipolar plates 410, the first end plate 431 and the second end plate 432, and the plurality of (three in the present embodiment) spacers 420 has the joining surfaces 410a, 431a, 432a, and 420a facing each other in the stacking direction of the cell members 450, and the recess 460 is formed on the outer side surface 420b of each of the plurality of spacers 420.

Thus, the surface area exposed to the outer side surfaces 320b of each spacer 420 is increased, and the heat generated in the positive active material layer 403 and the negative active material layer 404 of the cell member 450 by a battery reaction can be appropriately dissipated to the outside from the recess 460 of the spacer 420. Thus, it is possible to suppress deterioration of the charge and discharge characteristics due to heat remaining inside the battery.

Since it is only necessary to form, on the outer side surface 420b of the spacer 420, the recess 460 which opens to the outer side surface 420b, it is possible to simplify the configuration for achieving the heat dissipation function.

In order to improve heat dissipation of heat generated inside a battery to the outside, the joining width b2 (see FIG. 8) of the joining surface 420a of each spacer 420, the joining surface 431a of the first end plate 431, and the joining surface 432a of the second end plate 432 may be reduced. However, if the joining width b2 is reduced, the electrolyte from the electrolyte layer 405 is likely to leak out through joining surfaces 420a, 431a, and 432a. Therefore, in order to ensure the liquid leakage prevention performance, it is not preferable to reduce the joining width b2.

On the other hand, according to the bipolar battery 400 according to the fifth embodiment, the recess 460 for ensuring heat dissipation is formed on the outer side surface 420b of the spacer 420. Therefore, since the joining width b2 can be made large, the liquid leakage prevention performance of an electrolyte can be ensured.

In the bipolar battery 400 according to the fifth embodiment, on the outer side surface 410b of each of the plurality of bipolar plates 410, a recess 460 is also formed which opens to an outer side surface 410b.

As illustrated in FIG. 9 (only two recesses 460 are illustrated in FIG. 9), four recesses 460 formed on the outer side surface 410b of each bipolar plate 410 are formed on the outer side surface 410b of each of the quadrangular shaped bipolar plates 410.

Each recess 460 is formed in a rectangular shape elongated in the direction in which the bipolar plate 410 extends, and has a length L2, a depth F2, and a stacking direction width W2, and is formed so as to leave four corner portions 411 of the quadrangular shaped bipolar plate 410.

The length L2, the depth F2, and the stacking direction width W2 of each recess 460 are appropriately determined in consideration of the heat dissipation characteristics, the mechanical strength, and the liquid leakage prevention performance, which will be described below, in each bipolar plate 410.

In the bipolar battery 400 according to the fifth embodiment, a plate thickness T2 of the bipolar plate 410 is set to 5 mm to 30 mm, a length D2 of the bipolar plate 410 is set to 100 mm to 500 mm, the length L2 of each recess 460 is set to 90 mm to 490 mm, the depth F2 of each recess 460 is set to 0.5 mm to 15 mm, and the stacking direction width W2 of each recess 460 is set to 3 mm to 25 mm.

Note that each recess 460 is formed so as to leave the four corner portions 411 of the quadrangular shaped bipolar plate 410, but one recess 460 may be formed so as to surround the entire circumference of the quadrangular shaped bipolar plate 410 by also forming the recess in the four corner portions 411.

As described above, according to the bipolar battery 400 according to the fifth embodiment, on the outer side surface 410b of each of the plurality of bipolar plates 410, a recess 460 is also formed which opens to the outer side surface 410b. Thus, the surface area exposed to the outer side surfaces 410b of the bipolar plate 410 is increased, and the heat generated in the positive active material layer 403 and the negative active material layer 404 of the cell member 450 can be appropriately dissipated to the outside not only from the recess 460 of the spacer 420 but also from the recess 460 of the bipolar plate 410.

In the bipolar battery 400 according to the fifth embodiment, the plate thickness T2 of the bipolar plate 410 is greater than the plate thickness T1 of the bipolar plate 310 in the bipolar battery 300 according to the fourth embodiment, and the mechanical strength of the bipolar battery 400 is higher than the mechanical strength of the bipolar battery 300. In practice, the thickness of the bipolar plate may be increased in order to improve the mechanical strength of the bipolar battery. In this case, in order to improve the heat dissipation effect from the bipolar plate, as in the bipolar battery 400 according to the fifth embodiment, it is preferable that, on the outer side surface 410b of each of the plurality of bipolar plates 410, a recess 460 is also formed which opens to the outer side surface 410b.

Also in the bipolar battery 400 according to the fifth embodiment, it is possible to suppress deterioration of the charge and discharge characteristics due to heat remaining inside the battery, and to ensure the liquid leakage prevention performance of an electrolyte, and thus it is possible to achieve both high energy density and long-term reliability.

Also in the bipolar battery 400 according to the fifth embodiment, since on the outer side surface 420b of each of the plurality of spacers 420, the recess 460 is formed which opens to the outer side surface 420b, the recess 460 also functions as thinning at the time of molding, and the formability of each spacer 420 can be improved.

### Sixth Embodiment

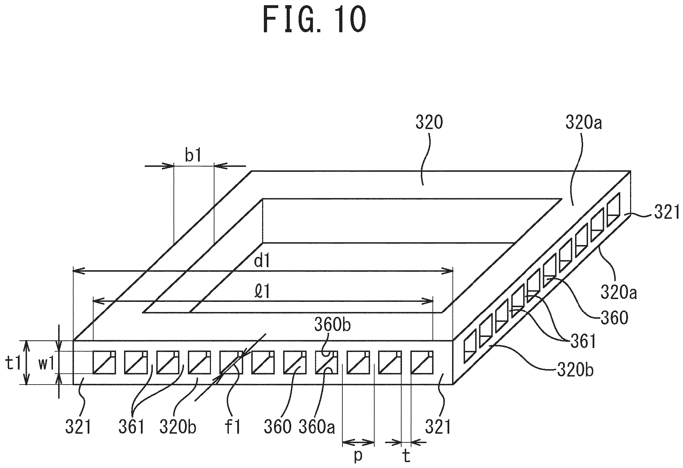

A bipolar battery according to a sixth embodiment of the present invention will now be described with reference to FIG. 10. FIG. 10 is a perspective view of a spacer used in the bipolar battery according to the sixth embodiment of the present invention.

The bipolar battery according to the sixth embodiment of the present invention has the same basic configuration as that of the bipolar battery 300 according to the fourth embodiment illustrated in FIG. 5, but differs in the shape of the recess 360 formed on the outer side surface 320b of each spacer 320.

As with the recess 360 of the fourth embodiment, as illustrated in FIG. 10 (only two recesses 360 are illustrated in FIG. 10), four recesses 360 formed on each of the plurality of spacers 320 used in the bipolar battery according to the sixth embodiment of the present invention are formed in a frame portion of each of the quadrangular frame-shaped spacers 320.

As with the recess 360 of the fourth embodiment, each recess 360 is formed in a rectangular shape elongated in the direction in which the frame portion of the spacer 320 extends, and has a length l1, a depth f1, and a stacking direction width w1, and is formed so as to leave four corner portions 321 of the quadrangular frame-shaped spacer 320.

However, the recess 360 of the sixth embodiment is different from the recess 360 of the fourth embodiment, and includes a plurality of reinforcing ribs 361 which extends in the stacking direction of the cell members 350 and connects between open end edges 360a and 360b of the recess 360.

The plurality of reinforcing ribs 361 each has a width t and is disposed at a predetermined installation pitch p along the longitudinal direction of the recess 360. Each reinforcing rib 361 extends from the open end edges 360a and 360b of the recess 360 to the bottom surface.

As described above, in the bipolar battery according to the sixth embodiment of the present invention, provided in the recess 360 is the reinforcing rib 361 which extends in the stacking direction of the cell members 350 and connects between the open end edges 360a and 360b of the recess 360. Thus, in the bipolar battery according to the sixth embodiment of the present invention, the surface area exposed to the outer side surface 320b of the spacer 320 is increased compared to the recess 360 according to the fourth embodiment, and the heat generated in the positive active material layer 303 and the negative active material layer 304 of the cell member 350 by a battery reaction can be more effectively dissipated to the outside from the recess 360 of the spacer 320.

By providing, in the recess 360, the reinforcing rib 361 which extends in the stacking direction of the cell members 350 and connects between the open end edges 360a and 360b of the recess 360, it is possible to improve the mechanical strength when the bipolar plate 310, the spacer 320, the first end plate 331, and the second end plate 332 are joined in the stacking direction at the joining surfaces 310a, 320a, 331a, and 332a. In particular, when the joining at the joining surfaces 310a, 320a, 331a and 332a is performed by vibration welding, the bipolar plate 310, the spacer 320, the first end plate 331, and the second end plate 332 are pressed in the stacking direction, and thus the mechanical strength is improved by providing the reinforcing rib 361 which extends in the stacking direction of the cell members 350 and connects between the open end edges 360a and 360b of the recess 360, which results in great practical benefits.

Note that the number, the installation pitch p, and the width t of the reinforcing ribs 361 provided in the recess 360 are appropriately determined in consideration of the heat dissipation characteristics and the mechanical strength in the spacer 320.

In the bipolar battery according to the sixth embodiment, a plate thickness T1 of the bipolar plate 310 is set to 1 mm to 10 mm, a plate thickness t1 of the spacer 320 is set to 5 mm to 30 mm, a length d1 of the spacer 320 is set to 100 mm to 500 mm, a joining width b1 is set to 1mm to 20 mm, a length l1 of each recess 360 is set to 90 mm to 490 mm, a depth f1 of each recess 360 is set to 0.5 mm to 15 mm, and the stacking direction width w1 of each recess 360 is set to 3 mm to 25 mm.

The width t of the reinforcing rib 161 is set to 1 mm to 10 mm, and the installation pitch p of the reinforcing rib 161 is set to 3 mm to 50 mm.

Although the embodiments of the present invention have been described above, the present invention is not limited to the embodiments, and various changes and improvements can be made.

For example, in the bipolar battery 1 according to the first embodiment, on the outer side surfaces of all of the plurality of frame units (the plurality of internal frame units 110, the first end frame unit 120, and the second end frame unit 130), the recesses 160 are formed which open to the outer side surfaces. Specifically, on the outer side surfaces of the rims 112 of all the internal frame units 110, the outer side surface of the rim 122 of the first end frame unit 120, and the outer side surface of the rim 132 of the second end frame unit 130, the recesses 160 are formed which open to the outer side surfaces. However, the recess 160 may be formed on the outer side surface of at least one frame unit 110, 120, and 130 of the plurality of frame units (the plurality of internal frame units 110, the first end frame unit 120, and the second end frame unit 130), specifically, on at least one of the outer side surface of the rim 112 of the internal frame unit 110, the outer side surface of the rim 122 of the first end frame unit 120, and the outer side surface of the rim 132 of the second end frame unit 130. The method of forming the recess is the same in the bipolar battery 11 according to the second embodiment and the bipolar battery according to the third embodiment.

As described above, the same effect as that described above can be obtained by forming the recess 160, which opens to the outer side surface, on the outer side surface of at least one frame unit 110, 120, and 130 of the plurality of frame units (the plurality of internal frame units 110, the first end frame unit 120, and the second end frame unit 130), specifically, on at least one of the outer side surface of the rim 112 of the internal frame unit 110, the outer side surface of the rim 122 of the first end frame unit 120, and the outer side surface of the rim 132 of the second end frame unit 130. In other words, it is possible to provide the bipolar battery 1 capable of appropriately dissipating the heat generated in the cell member 150 to the outside by a simple configuration.

The shape of each recess 160 in the bipolar battery 1 according to the first embodiment does not necessarily need to be formed in a rectangular shape elongated in the direction in which the frame portions of the rims 112, 122, and 132 extend. The same applies to the shape of each recess 260 in the bipolar battery 11 according to the second embodiment and the shape of each recess 160 in the bipolar battery according to the third embodiment.

The joining method at the joining surfaces 112a, 122a, and 132a in the bipolar battery 1 according to the first embodiment and the joining method at the joining surfaces 212a, 222a, and 232a in the bipolar battery 11 according to the second embodiment are not limited to joining by an adhesive or vibration welding, and may be joining by other welding processing such as thermal welding by a hot plate or infrared heating, or solvent melting. The same applies to the joining method at the joining surface in the bipolar battery according to the first embodiment.

The electrical connection means provided on the substrates 111 and 211 in the bipolar storage batteries 1 and 11 according to the first embodiment and the second embodiment is not limited to a specific method. For example, it is also possible to electrically connect both surfaces of the substrates by including conductive particles or conductive fibers in the entire substrates. It is also possible to incorporate a conductive member capable of electrical conduction in the substrates. The same applies to the electrical connection means provided on the substrate in the bipolar battery according to the third embodiment.

In the bipolar storage batteries 300 and 400 according to the fourth embodiment and the fifth embodiment, the number of the bipolar plates 310 and 410 is two, and the number of the spacers 320 and 420 is three, but the embodiments are not limited thereto, and the number of the bipolar plates 310 and 410 may be one or more, and the number of the spacers 320 and 420 may be two or more. The same applies to the bipolar battery according to the sixth embodiment.

In the bipolar battery 300 according to the fourth embodiment, on the outer side surface 320b of each of the plurality of spacers 320, the recess 360 is formed which opens to the outer side surface 320b. However, the recess 360 may be formed on the outer side surface 320b of at least one spacer 320 of the plurality of spacers 320. The method of forming the recess is the same in the bipolar battery 400 according to the fifth embodiment and the bipolar battery according to the sixth embodiment.

Note that, in the bipolar battery 300 according to the fourth embodiment, the recess 360 is not limited to being formed on the outer side surface 320b of at least one spacer 320 of the plurality of spacers 320, and may be formed on the outer circumferential surface of at least one frame unit of the plurality of bipolar plates 310, the first end plate 331, the second end plate 332, and the plurality of spacers 320.

In other words, on the outer side surface of at least one frame unit 310, 331, 332, and 320 of the plurality of frame units (the plurality of bipolar plates 310, the first end plate 331, the second end plate 332, and the plurality of spacers 320), the recess 360 may be formed which opens to the outer side surface. The method of forming the recess is the same in the bipolar battery according to the sixth embodiment.

As described above, the same effect as that described above can be obtained by forming the recess 360, which opens to the outer side surface 320b, on the outer side surface 320b of at least one spacer 320 of the plurality of spacers 320. In other words, it is possible to provide the bipolar battery 300 capable of appropriately dissipating the heat generated in the cell member 350 to the outside by a simple configuration.

The same effect as that described above can also be obtained by forming the recess 360, which opens to the outer side surface, on the outer side surface of at least one frame unit 310, 331, 332, and 320 of the plurality of frame units (the plurality of bipolar plates 310, the first end plate 331, the second end plate 332, and the plurality of spacers 320).

The shape of each recess 360 in the bipolar battery 300 according to the fourth embodiment does not necessarily need to be formed in a rectangular shape elongated in the direction in which the frame portion of the spacer 320 extends. The same applies to the shape of each recess 460 in the bipolar battery 400 according to the fifth embodiment and the shape of each recess 360 in the bipolar battery according to the sixth embodiment.

In the bipolar battery 400 according to the fifth embodiment, on the outer side surface 410b of each of the plurality of bipolar plates 410, the recess 460 is formed which opens to the outer side surface 410b. However, the recess 460 may be formed on the outer side surface 410b of at least one bipolar plate 410 of the one or plurality of bipolar plates 410.

In the bipolar battery according to the sixth embodiment, the plurality of reinforcing ribs 361 is provided in the recess 360 formed in each spacer 320.

In the bipolar battery 400 according to the fifth embodiment, these reinforcing ribs 361 may be formed in the recess 460 formed in at least one spacer 420 of the plurality of spacers 420. Thus, the surface area exposed to the outer side surface 420b of the spacer 420 is further increased compared to the recess 460 formed in the spacer 420 according to the fifth embodiment, and the heat generated in the positive active material layer 403 and the negative active material layer 404 of the cell member 450 by a battery reaction can be more effectively dissipated to the outside from the recess 460 of the spacer 420. By providing, in the recess 460 of the spacer 420, the reinforcing rib 361, which extends in the stacking direction of the cell members 350 and connects between the open end edges of the recess 360, it is possible to improve the mechanical strength when the bipolar plate 410, the spacer 420, the first end plate 431, and the second end plate 432 are joined in the stacking direction at the joining surfaces.

In the bipolar battery 400 according to the fifth embodiment, the aforementioned reinforcing rib 361 may be formed in the recess 460 formed in at least one bipolar plate 410 of the one or plurality of bipolar plates 410. Thus, the surface area exposed to the outer side surface 410b of the bipolar plate 410 is further increased compared to the recess 460 formed in the bipolar plate 410 according to the fifth embodiment, and the heat generated in the positive active material layer 403 and the negative active material layer 404 of the cell member 450 by a buttery reaction can be more effectively dissipated to the outside from the recess 460 of the bipolar plate 410. By providing the reinforcing rib 361 in the recess 460 of the bipolar plate 410, it is possible to further improve the mechanical strength when the bipolar plate 410, the spacer 420, the first end plate 431, and the second end plate 432 are joined in the stacking direction at the joining surfaces.

The joining method at the joining surfaces 310a, 320a, 331a, and 332a in the bipolar battery 300 according to the fourth embodiment and the joining method at the joining surfaces 410a, 420a, 431a, and 432a in the bipolar battery 400 according to the fifth embodiment are not limited to joining by an adhesive or vibration welding, and may be joining by other welding processing such as thermal welding by a hot plate or infrared heating, or solvent melting. The same applies to the joining method at the joining surface in the bipolar battery according to the sixth embodiment.

The electrical connection means provided on the bipolar plates 310 and 410 in the bipolar battery 300 according to the fourth embodiment and the bipolar battery 400 according to the fifth embodiment is not limited to a specific method. For example, it is also possible to electrically connect both surfaces of the substrates by including conductive particles or conductive fibers in the entire substrates. It is also possible to incorporate a conductive member capable of electrical conduction in the substrates. The same applies to the electrical connection means provided on the bipolar plate in the bipolar battery according to the sixth embodiment.

The bipolar battery 1 according to the first embodiment is a bipolar lead storage battery in which the positive electrode 151 has the positive electrode lead layer 101 and the negative electrode 152 has the negative electrode lead layer 102, but may be a bipolar battery in which a metal other than lead is used for the positive electrode 151 and the negative electrode 152. The same applies to the bipolar battery 11 according to the second embodiment, the bipolar battery according to the third embodiment, the bipolar battery 300 according to the fourth embodiment, the bipolar battery 400 according to the fifth embodiment, and the bipolar battery according to the sixth embodiment.

### Industrial Applicability

Since the bipolar battery according to the present invention can appropriately dissipate heat generated in the cell member to the outside by a simple configuration, it is possible to suppress deterioration of the charge and discharge characteristics due to heat remaining inside the battery, to ensure the liquid leakage prevention performance of an electrolyte, to achieve both high energy density and long-term reliability, and to be very beneficially used in various industries.

### Reference Signs List

- 1, 11: BIPOLAR BATTERY
- 101, 201: POSITIVE ELECTRODE LEAD LAYER
- 102, 202: NEGATIVE ELECTRODE LEAD LAYER
- 103, 203: POSITIVE ACTIVE MATERIAL LAYER
- 104, 204: NEGATIVE ACTIVE MATERIAL LAYER
- 105, 205: ELECTROLYTE LAYER
- 107, 207: POSITIVE ELECTRODE TERMINAL
- 108, 208: NEGATIVE ELECTRODE TERMINAL
- 110, 210: INTERNAL FRAME UNIT
- 111, 211: SUBSTRATE (BIPOLAR PLATE)
- 112, 212: RIM
- 112a, 212a: JOINING SURFACE
- 120, 220: FIRST END FRAME UNIT
- 121, 221: FIRST END PLATE
- 122, 222: RIM
- 122a, 222a: JOINING SURFACE
- 130, 230: SECOND END FRAME UNIT
- 131, 231: SECOND END PLATE
- 132, 232: RIM
- 132a, 232a: JOINING SURFACE
- 150, 250: CELL MEMBER
- 151, 251: POSITIVE ELECTRODE
- 152, 252: NEGATIVE ELECTRODE
- 160, 260: RECESS
- 161: REINFORCING RIB
- 300, 400: BIPOLAR BATTERY
- 301, 401: POSITIVE ELECTRODE LEAD LAYER
- 302, 402: NEGATIVE ELECTRODE LEAD LAYER
- 303, 403: POSITIVE ACTIVE MATERIAL LAYER
- 304, 404: NEGATIVE ACTIVE MATERIAL LAYER
- 305, 405: ELECTROLYTE LAYER
- 306, 406: POSITIVE ELECTRODE TERMINAL
- 307, 407: NEGATIVE ELECTRODE TERMINAL
- 310, 410: BIPOLAR PLATE
- 310a, 410a: JOINING SURFACE
- 310b, 410b: OUTER SIDE SURFACE
- 320, 420: SPACER
- 320a, 420a: JOINING SURFACE
- 320b, 420b: OUTER SIDE SURFACE
- 321, 421: FOUR CORNER PORTIONS
- 331, 431: FIRST END PLATE
- 331a, 431a: JOINING SURFACE
- 332, 432: SECOND END PLATE
- 332a, 432a: JOINING SURFACE
- 350, 450: CELL MEMBER
- 351, 451: POSITIVE ELECTRODE
- 352, 452: NEGATIVE ELECTRODE
- 360, 460: RECESS
- 361: REINFORCING RIB
- C: CELL (SPACE FOR HOUSING CELL MEMBER)

## Claims

1. A bipolar battery comprising: a plurality of cell members each including a positive electrode having a positive active material layer, a negative electrode having a negative active material layer, and an electrolyte layer interposed between the positive electrode and the negative electrode; and a plurality of frame units configured to form a plurality of cells individually housing the plurality of cell members, cell members adjacent to each other being electrically connected to each other in series, wherein
on an outer side surface of at least one frame unit of the plurality of frame units, a recess opening to the outer side surface is formed.

2. The bipolar battery according to claim 1, wherein
each of the plurality of frame units includes a rim having joining surfaces facing each other in a stacking direction of the cell members, and
the recess is formed on an outer side surface of a rim of at least one frame unit of the plurality of frame units.

3. The bipolar battery according to claim 2, wherein provided in the recess is a reinforcing rib extending in a stacking direction of the cell members connecting between open end edges of the recess.

4. The bipolar battery according to claim 1, wherein
the plurality of frame units includes: one or a plurality of bipolar plates disposed between the cell members adjacent to each other in a stacking direction; a pair of end plates disposed at one end and an other end in a stacking direction of a plurality of the cell members; and a plurality of spacers disposed between the bipolar plates adjacent to each other in a stacking direction, between one end plate of the pair of end plates and the bipolar plate, and between an other end plate of the pair of end plates and the bipolar plate,
a plurality of cells individually housing the plurality of cell members is formed by the one or plurality of bipolar plates, the pair of end plates, and the plurality of spacers,
each of the one or plurality of bipolar plates, the pair of end plates, and the plurality of spacers has joining surfaces facing each other in a stacking direction of the cell members, and
the recess is formed on an outer side surface of at least one of the plurality of spacers.

5. The bipolar battery according to claim 4, wherein the recess is formed on an outer side surface of at least one of the one or plurality of bipolar plates.

6. The bipolar battery according to claim 4 or 5, wherein provided in the recess is a reinforcing rib extending in a stacking direction of the cell members and connecting between open end edges of the recess.

7. The bipolar battery according to any one of claims 1 to 6, wherein the bipolar battery is a bipolar lead storage battery in which the positive electrode has a positive electrode lead layer and the negative electrode has a negative electrode lead layer.
